# EUROPÄISCHE PATENTSCHRIFT

(11) **EP 4 302 591 B1**
(45) Veröffentlichungstag und Bekanntmachung des Hinweises auf die Patenterteilung: **07.05.2025**
(21) Anmeldenummer: 22183016.9
(22) Anmeldetag: 05.07.2022
(51) Int. Cl.: A01G 9/02, E04F 13/06, E04F 13/07, E04F 19/08

(54) **BAUSATZ ZUM ERSTELLEN EINES BEGRÜNBAREN WANDELEMENTS**
KIT FOR CONSTRUCTING A GREEN WALL ELEMENT
ENSEMBLE PERMETTANT DE CRÉER UN ÉLÉMENT DE MUR VÉGÉTAL

(43) Veröffentlichungstag der Anmeldung: 10.01.2024
(73) Patentinhaber: Gießler, Dirk, 79356 Eichstetten Baden-Württemberg (DE)
(72) Erfinder: Gießler, Dirk, 79356 Eichstetten Baden-Württemberg (DE)
(74) Vertreter: Huwer, Andreas

(56) Entgegenhaltungen:
- EP-A1- 3 693 520
- WO-A1-2010/025837

## Beschreibung

Die Erfindung betrifft einen Bausatz zum Erstellen eines begrünbaren Wandelements, mit einem Gehäuseteil, das eine frontseitige Einbauöffnung und eine Innenhöhlung aufweist, die durch eine Rückwand, eine linke Seitenwand, eine rechte Seitenwand und einen Gehäuseboden des Gehäuseteils begrenzt wird, wobei die Rückwand, die Seitenwände und der Gehäuseboden wasserdicht ausgestaltet und die Rückwand mit den Seitenwänden und dem Gehäuseboden und dieser mit den Seitenwänden wasserdicht verbunden ist, mit wenigstens einem, mindestens eine Pflanzöffnung aufweisenden Wandbauteil, das derart in die Einbauöffnung des Gehäuseteils einsetzbar und mit diesem verbindbar ist, dass sich das Wandbauteil in vertikaler Richtung erstreckt und zwischen der von der Pflanzöffnung aufgespannten Fläche und der Rückwand des Gehäuseteils mindestens ein Hohlraum gebildet ist, der derart mit einem Pflanzsubstrat befüllbar ist, dass eine in dem Pflanzsubstrat wurzelnde Pflanze durch die Pflanzöffnung hindurch auf die dem Hohlraum abgewandte Vorderseite des Wandbauteils hindurchwachsen kann.

Ein derartiger Bausatz ist aus der WO 2005/005747 A2 bekannt. Er weist ein Gehäuseteil mit zwei parallel zueinander angeordneten Seitenwänden und einer in einer Horizontalebene angeordneten Bodenplatte auf, welche die Seitenwände etwa U-förmig miteinander verbindet. Das Gehäuseteil hat ferner ein Rückwand, die rechtwinklig zu den von den Seitenwänden aufgespannten Ebenen und rechtwinklig zu der Ebene der Bodenplatte angeordnet ist. Die Seitenwände und die Bodenplatte begrenzen einen Hohlraum, der an seiner Vorderseite und nach oben hin offenen ist.

Die Seitenwände haben an ihren einander zugewandten Innenseiten vertikale Nuten, zwischen die von oben ein zu den Nuten passendes Wandbauteil in den Hohlraum derart einschiebbar ist, dass es an der Bodenplatte zur Auflage kommt. Das Wandbauteil erstreckt sich in vertikaler Richtung und wird quer zu seiner Erstreckungsebene von einer Vielzahl von matrixförmig in mehreren Reihen und mehreren Spalten angeordneten Pflanzöffnungen durchsetzt. Zwischen dem in die Nuten eingesetzten Wandbauteil und der Rückwand ist ein Hohlraum gebildet, der mit Erde oder einem anderen geeigneten Pflanzsubstrat befüllbar ist. Dieses kann von oben in die Innenhöhlung eingefüllt werden. Im dem Pflanzsubstrat wurzelnde Pflanze können durch die Pflanzöffnungen hindurch auf die dem Hohlraum abgewandte Vorderseite des Wandbauteils hindurchwachsen.

Die Rückwand hat an ihrem oberen Randbereich an ihrer der Innenhöhlung abgewandten Rückseite einen leistenartigen Vorsprung, der an seiner Unterseite eine Nut aufweist, die in ein Tragprofil aus Blech einhängbar ist. Das Tragprofil ist als U-Profil ausgestaltet, das sich in horizontaler Richtung erstreckt und mit seinen beiden U-Schenkel nach oben weist. Einer der Schenkel ist an einer Gebäudewand angeschraubt und der andere Schenkel greift mit seinem dem U-Quersteg abgewandten freien Ende von unten in die Nut des leistenartigen Vorsprungs ein. Als Aushebesicherung kann die Rückwand des Gehäuseteils mit einer selbstbohrenden Schraube durchbohrt werden, die mit der Tragleiste verschraubt wird. Oberhalb und unterhalb des U-Querstegs des U-Profils werden Dämmstoffplatten aus Mineralwolle auf die Gebäudewand aufgebracht, die mit Ausnahme der Stelle, an welcher der U-Quersteg des U-Profils ist, die Rückwand lückenlos auch hinter dem Gehäuseteil bedecken. Ungünstig ist dabei jedoch, dass das U-Profil eine Kältebrücke bildet, welche die aus den Dämmstoffplatten gebildete Isolierschicht durchsetzt. Das begrünbare Wandelement ist dazu vorgesehen, außen auf eine Wärmedämmverbundschicht einer Gebäudewand montiert zu werden. Das hat jedoch den Nachteil, dass die Gebäudefassade durch das begrünbare Wandelement zergliedert wird, was sich ungünstig auf das Gebäudedesign auswirken kann.

Der vorbekannte Bausatz zum Erstellen eines begrünbaren Wandelements weist außerdem eine Bewässerungseinrichtung für das Pflanzsubstrat bzw. die darin wurzelnden Pflanzen auf. Die Bewässerungseinrichtung hat in der Innenhöhlung oberhalb des Hohlraums für das Substrat einen horizontalen Polyethylenschlauch mit Wasseraustrittsöffnungen.

Aus der DE 10 2020 121 022 A1 ist ferner ein begrünbares Wandelement bekannt, das ein in vertikaler Richtung orientiertes Lamellenrost hat, welches einen mit Pflanzsubstrat befüllbaren Hohlraum des Wandelements begrenzt. Das Lamellenrost hat eine erste Anzahl von ersten Stäben und eine zweite Anzahl von zweiten Stäben. Die ersten Stäben sind in vertikaler Richtung und die zweiten Stäbe in horizontaler Richtung orientiert. Die ersten und zweiten Stäbe umgrenzen Pflanzöffnungen, durch welche in dem Pflanzsubstrat wurzelnde Pflanzen durch die Pflanzöffnungen hindurch auf die dem Hohlraum abgewandte Vorderseite des Lamellenrosts hindurchwachsen können. Das Lamellenrost kann an einer Mauer mit Abstand zu dieser angeordnet sein. Zwischen dem Hohlraum und der Mauer kann eine feuchtigkeitsundurchlässige und wärmeisolierende Isolierschicht angeordnet sein. Auch dieses Wandelement wird also außen auf eine Wärmedämmverbundschicht einer Gebäudewand montiert.

Der Hohlraum des vorbekannten begrünbaren Wandelements kann auch zwischen zwei voneinander beabstandeten Lamellenrosten gebildet sein. Diese sind zwischen zwei als Betonfertigteile ausgebildeten, nicht wärmeisolierten Ständerelementen angeordnet, die an ihren einander zugewandten und in vertikaler Richtung orientierten Schmalseiten Nuten aufweisen, in denen die Lamellenroste gehalten sind.

Aus der WO 2010/025837 A1 ist zudem ein Bausatz zum Erstellen eines begrünbaren Wandelementes gemäß der Präambel von Anspruch 1 bekannt.

Aufgabe der Erfindung ist es, einen Bausatz zum Erstellen eines begrünbaren Wandelements der eingangs genannten Art zu schaffen, der - wenn das begrünbare Wandelement an der Außenwand eines Gebäudes montiert ist, das eine Wärmedämmverbundschicht aufweist - ein optisch schönes Gebäudedesign ermöglicht. Außerdem soll der Bausatz bei der Montage der Wärmedämmverbundschicht auf einfache Weise und unter Vermeidung von Kältebrücken am Gebäude montiert werden können.

Die Erfindung ist durch ein Bausatz zum Erstellen eines begrünbaren Wandelements gemäß Anspruch 1 definiert. Bevorzugte Ausbildungen sind in den abhängigen Ansprüchen definiert.

Erfindungsgemäß wird diese Aufgabe bei einem Bausatz zum Erstellen eines begrünbaren Wandelements der eingangs genannten Art dadurch gelöst, dass zumindest die Rückwand des Gehäuseteils wärmedämmend ausgestaltet ist, dass das Gehäuseteil eine mit der Rückwand und den Seitenwänden verbundene obere Gehäusewand aufweist, welche die Innenhöhlung des Gehäuseteils nach oben hin begrenzt, dass zum Integrieren des begrünbaren Wandelements in eine auf einer Außenwand eines Gebäudes angeordnete Wärmedämmverbundschicht an dem die Einbauöffnung umgrenzenden Rand des Gehäuseteils Putzanschlussprofile vorgesehen sind, die eine Putzabziehkante aufweisen und mit mindestens einem Einputz-Gewebe verbunden sind, dass das oder die Einputz-Gewebe zum Einputzen in eine auf eine an das Wandelement angrenzende Dämmstoffschicht der Wärmedämmverbundschicht aufzubringende Putzschicht allseitig über die Außenkontur des Gehäuseteils übersteht, dass an der Rückwand des Gehäuseteils Befestigungsstellen vorgesehen sind, an denen die Rückwand durchsetzende Befestigungselemente zum Verankern in der Außenwand des Gebäudes anbringbar sind, dass der Bausatz Abdeckungen für die Befestigungsstellen aufweist, welche wasserdicht mit dem die Befestigungsstelle umgrenzenden Wandungsbereich der Rückwand verbindbar sind, und dass an dem Gehäuseteil eine sich entlang des unteren Rands der Einbauöffnung ersteckende Tropfleiste vorgesehen ist, deren der Rückwand abgewandter Randbereich gegenüber der durch die Putzabziehkanten der Putzanschlussprofile aufgespannten Ebene vorsteht.

Somit kann das Gehäuseteil beim Montieren einer Wärmedämmverbundschicht an einem Gebäude auf einfache Weise derart in die Wärmedämmverbundschicht integriert werden, dass die Seitenwände und die obere Gehäusewand des Gehäuseteils mit ihren dem Gebäude abgewandten äußeren bzw. vorderseitigen Stirnflächen mit den dem Gebäude abgewandten Oberflächen der an das Gehäuseteil angrenzenden Dämmstoffplatten der Wärmedämmverbundschicht fluchtet. Dies kann beispielsweise so gemacht werden, dass zunächst unterhalb der Stelle, an der das Gehäuseteil an der Gebäudewand montiert werden soll, in üblicher Weise Dämmstoffplatten an der Gebäudewand positioniert und mit Hilfe von WDVS-Dübeln, welche die Dämmstoffplatten durchsetzen und in der Gebäudewand verankert sind, an dieser befestigt werden.

Danach wird das Gehäuseteil auf den zuvor montierten Dämmstoffplatten abgestellt und an den Befestigungsstellen seiner Rückwand mit Hilfe von die Rückwand durchsetzenden und in der Außenwand des Gebäudes verankerten Befestigungselementen an der Außenwand des Gebäudes fixiert. Danach werden die Abdeckungen an den Befestigungsstellen angebracht, um die Rückwand an den Befestigungsstellen wasserdicht abzudichten.

Bevorzugt wird die Rückwand des Gehäuseteils zusätzlich mit Klebstoff an der Außenwand des Gebäudes befestigt. Der Klebstoff kann vor dem Positionieren des Gehäuseteils an der Außenwand auf die der Innenhöhlung abgewandte Rückseite der Rückwand des Gehäuseteils und/oder die Außenwand des Gebäudes aufgetragen werden.

Nachdem das Gehäuseteil auf diese Weise an der Außenwand befestigt wurde, können die restlichen an das Gehäuseteil angrenzenden Wärmedämmverbundelemente an der Gebäudewand mit Hilfe von WDVS-Dübeln montiert werden. Die an den Putzanschlussprofilen des Gehäuseteils vorgesehen Einputz-Gewebe erstrecken sich dann bis über die an das Gehäuseteil angrenzenden Wärmedämmverbundelemente. In einem weiteren Arbeitsschritt wird ein Armierungsgewebe auf die an das Gehäuseteil angrenzenden Dämmstoffplatten aufgebracht und danach wird ein Armierungsputz auf die der Gebäudewand abgewandten Oberflächen der an das Gehäuseteil angrenzenden Dämmstoffplatten und die äußeren, die Einbauöffnung umgrenzenden Oberflächenbereiche des Gehäuseteils aufgetragen, um den Armierungsputz in das Einputz-Gewebe und das Armierungsgewebe einzuspachteln. Bei Bedarf kann dabei der Armierungsputz über die Putzleisten des Gehäuseteils abgezogen werden. Somit ergibt sich an der Gebäudewand (z.B. Mauerwerk) abgewandten Außenfläche der Warmedämmverbundschicht oberhalb des Gehäusebodens eine bis an die Einbauöffnung durchgehend ebene Oberfläche, die ein optisch schönes Gebäudedesign ermöglicht. Da die Rückwand des Gehäuseteils wärmedämmend ausgestaltet ist, werden im Bereich der Innenhöhlung Kältebrücken an dem begrünbaren Wandelement vermieden.

Nachdem das Einputz-Gewebe in den Armierungsputz eingeputzt wurde, kann bei Bedarf ein Oberputz auf den Armierungsputz aufgetragen werden. Dann wird das Wandbauteil in die Einbauöffnung des Gehäuseteils eingesetzt und der zwischen der Rückwand des Gehäuseteil und dem Wandbauteil befindliche Hohlraum mit dem Pflanzsubstrat befüllt. Danach kann in das Pflanzsubstrat durch die Pflanzöffnung(en) hindurch mindestens eine Pflanze eingepflanzt werden, die durch die wenigstens eine Pflanzöffnung hindurch auf die dem Hohlraum abgewandte Seite des Wandbauteils hindurchwächst.

Durch die entlang des unteren Rands der Einbauöffnung am Gehäuseteil angeordnete Tropfleiste wird verhindert, dass Regen- oder Gießwasser, das in die Einbauöffnung gelangt und von dem Pflanzsubstrat und/oder den Pflanzen nicht aufgenommen wird, unterhalb der Einbauöffnung an der Gebäudefassade herunterläuft und dort Flecken und/oder Streifen an der Gebäudefassade verursacht. Der der Rückwand abgewandter Randbereich der Tropfleiste hat vorzugsweise eine nach unten weisende Komponente.

Bei einer bevorzugten Ausgestaltung der Erfindung weisen die Befestigungsstellen jeweils eine in die der Innenhöhlung des Gehäuseteils zugewandte vorderseitige Oberfläche der Rückwand eingelassene Senkung auf. Ein Handwerker, der das Gehäuseteil an der Außenwand eines Gebäudes montiert, kann dann zunächst das Gehäuseteil mit seiner Rückwand an der Außenwand positionieren, um anschließend z.B. mit einem Bohrhammer den Boden der Senkung zu durchbohren und im weiteren Verlauf der Bohrung eine Lochung zum Verankern eines die Rückwand durchsetzenden, ein Kopfteil und einen Schaft aufweisenden Befestigungselements, wie z.B. eines Spreizdübels, in die Außenwand einzubringen. Die Senkungen sind derart an der Rückwand angeordnet, dass eine statisch sichere Verankerung des Gehäuseteils an der Außenwand des Gebäudes gewährleistet ist, wenn die Befestigungselemente durch die Senkungen der Rückwand hindurch in die Außenwand eingebracht und an dieser verankert sind. Das Kopfteil des Befestigungselements wird vorzugsweise vollständig in die Senkung eingelassen, damit es über den die Senkung umgrenzenden Randbereich der Rückwand nicht übersteht.

Bei einer zweckmäßigen Ausführungsform der Erfindung ist vorgesehen, dass die Senkung jeweils einen Boden und eine Umfangswand aufweist, die einen Aufnahmeraum für ein Kopfteil des Befestigungselements begrenzen, dass in den Boden der Senkung ein Sackloch eingelassen ist, durch das hindurch die Rückwand orthogonal zu der von ihr aufgespannten Ebene durchbohrbar und/oder durchstoßbar ist, oder dass im Boden der Senkung ein Durchtrittsloch angeordnet ist, und dass das Sackloch oder das Durchtrittsloch von der Umfangswand der Senkung beabstandet und bevorzugt mittig zu dieser angeordnet ist. Beim Durchbohren der Rückwand kann das Sackloch bzw. das Durchtrittsloch als Zentrierung für den Bohrer dienen.

Bevorzugt sind die Abmessungen der Senkung derart gewählt sind, dass in dem Sackloch ein Dübelkopf eines WDVS-Dübels vollständig versenkbar ist, vorzugsweise derart, dass der Dübelkopf bündig mit der der Innenhöhlung des Gehäuseteils zugewandten vorderseitigen Oberfläche des die Senkung umgrenzenden Wandungsbereichs der Rückwand, angeordnet ist. Durch die Verwendung von WDVS-Dübeln zum Befestigen des Gehäuseteils an der Außenwand werden Kältebrücken an den Befestigungsstellen der Rückwand vermieden. Außerdem können zum Befestigen des Gehäuseteils die gleichen WDVS-Dübel verwendet werden wie zum Befestigen der an das Gehäuseteils angrenzenden Dämmstoffplatten. Hierdurch wird die Integration des begrünbaren Wandelements in die Wärmedämmverbundschicht des Gebäudes weiter vereinfacht.

Bei einer vorteilhaften Ausgestaltung der Erfindung sind die Abdeckungen für die Befestigungsstellen als Pflaster ausgestaltet, das eine wasserdichte Folie aufweist, die an einer Seite mit einer an der Folie haftenden Klebstoffschicht zum Verbinden mit der Rückwand des Gehäuseteils beschichtet ist, wobei die Klebstoffschicht durch eine abziehbare Schutzfolie abgedeckt ist. Dabei sind die Abdeckungen für die Befestigungsstellen bevorzugt als Butylpflaster ausgestaltet.

Bei einer Weiterbildung der Erfindung weisen die Seitenwände, der Gehäuseboden und die obere Gehäusewand mindestens eine Schicht aus einem wärmedämmenden Material auf, wobei die Rückwand vorzugsweise eine geringere Wärmeleitfähigkeit aufweist als dieses Material. Da die Wandstärke der Rückwand im Vergleich zur Wandstärke der an das Gehäuseteil angrenzenden Dämmstoffplatten der WDVS-Schicht reduziert ist, wird für die Rückwand bevorzugt ein Hochleistungsdämmstoff verwendet, insbesondere ein Aerogel, ein Polyurethane-Hartschaum oder ein Polyester-Hartschaum. Es sind auch Kombinationen dieser Materialien möglich. Wenn die Rückwand Durchtrittslöcher für Befestigungselemente aufweist, kann die Rückwand auch als Vakuumpanel ausgestaltet sein. Ferner kann die Rückwand mindestens eine Schicht aus Steinwolle und/oder einem nachwachsenden Dämmstoff, insbesondere Kork und/oder Holzweichfaser aufweisen.

Bei einer bevorzugten Ausgestaltung der Erfindung weist die Rückwand und/oder der Gehäuseboden und/oder die obere Gehäusewand und/oder weisen die Seitenwände mindestens eine Schicht aus einem Dämmstoff auf, die an ihrer der Innenhöhlung des Gehäuseteils zugewandten inneren Oberfläche und/oder an ihrer der Innenhöhlung abgewandten äußeren Oberfläche mit einer wasserdichten Schicht beschichtet ist, insbesondere einer PVC-Dichtfolie oder einer PVC-Platte. Hierdurch wird die Wasserdichtigkeit der Rückwand, der Seitenwand, der oberen Gehäusewand bzw. des Gehäusebodens verbessert und es wird das Eindiffundieren von Feuchtigkeit in den Dämmstoff bzw. in die Poren des Dämmstoffs erschwert. Durch die Verwendung einer PVC-Platte wird außerdem die mechanische Festigkeit und Biegesteifigkeit der aus dem Dämmstoff und der mindestens einen PVC-Platte gebildeten Schichtanordnung verbessert, was insbesondere vorteilhaft ist, wenn als Dämmstoff ein Aerogel zur Anwendung kommt. Gegebenenfalls ist es sogar möglich, dass die Rückwand, der Gehäuseboden, die obere Gehäusewand und/oder die Seitenwände als Sandwichplatten mit mindestens vier Schichten ausgestaltet sind, bei der sich quer zu deren Erstreckungsebene jeweils eine Schicht aus einem Dämmstoff und eine Schicht aus PVC aufweist.

Bei einer Weiterbildung der Erfindung ist vorgesehen, dass das Gehäuseteil eine vordere Gehäusewand aufweist, welche an die Einbauöffnung angrenzt,
- dass die vordere Gehäusewand einen mit der linken Seitenwand verbundenen und gegenüber dieser in Richtung zum linken Rand der Einbauöffnung hin vorstehenden linken Wandungsbereich hat, hinter den sich die Innenhöhlung des Gehäuseteils erstreckt,
- dass die vordere Gehäusewand einen mit der rechten Seitenwand verbundenen und gegenüber der rechten Seitenwand in Richtung zu einem rechten Rand der Einbauöffnung hin vorstehenden rechten Wandungsbereich hat, hinter den sich die Innenhöhlung des Gehäuseteils erstreckt,
und dass das Wandbauteil, wenn es in die Einbauöffnung des Gehäuseteils eingesetzt und mit diesem verbunden ist, sich in der Innenhöhlung bis hinter den linken und den rechten Wandungsbereich der vorderen Wand erstreckt. Für einen Betrachter des begrünbaren Wandelements ist dann der Rand des Wandbauteils in der Einbauöffnung nicht sichtbar. Hierdurch wird das Design des begrünbaren Wandelements weiter verbessert und es wird in der Vorderansicht auf die Einbauöffnung ein zur Seite hin fugenloser Anschluss des Wandbauteils an die an die Einbauöffnung angrenzende Putzschicht ermöglicht.

Bei einer vorteilhaften Ausführungsform der Erfindung sind in der Innenhöhlung des Gehäuseteils mindestens zwei erste Stäbe angeordnet, die sich in vertikale Richtung erstrecken und an dem Gehäuseteil fixiert sind, dass das Wandbauteil mehrere zweite Stäbe aufweist, die derart quer zu den ersten Stäben in die Innenhöhlung des Gehäuseteils einsetzbar und in dieser mit den mit den ersten Stäben zu einem Lamellenrost verbindbar sind, dass die Pflanzöffnungen jeweils durch benachbarte horizontale und vertikale Stäbe umgrenzt sind. Die ersten und/oder zweiten Stäbe bestehen vorzugsweise aus Aluminium oder aus Kunststoff. Hierdurch wird ein geringes Gewicht des begrünbaren Wandelements ermöglicht. Die an den Befestigungsstellen auf die Rückwand einwirkenden statischen Kräfte sind dann entsprechend reduziert, wenn das begrünbare Wandelements in eine Wärmedämmverbundschicht eines Gebäudes eingebaut ist.

Bei einer zweckmäßigen Ausgestaltung der Erfindung ist vorgesehen, dass die ersten Stäbe jeweils mindestens einen an der Rückwand fixierten Befestigungsflansch aufweisen, dass die ersten Stäbe Einkerbungen haben, die zur Einbauöffnung hin offen sind, und dass die zweiten Stäbe durch die Einbauöffnung des Gehäuseteils hindurch in die Einkerbungen der ersten Stäbe einsetzbar sind. Hierdurch können die zweiten Stäbe auf einfache Weise durch die Einbauöffnung hindurch an den als Tragstäben dienenden ersten Stäben befestigt und bei Bedarf wieder von diesen entfernt werden. Mit der Montage der zweiten Stäbe wird bevorzugt an den untersten Einkerbungen der ersten Stäbe begonnen, um danach an den darüber befindlichen Einkerbungen in entsprechender Weise weitere zweite Stäbe zu montieren. Nach der Montage jedes zweiten Stabs oder nach der Montage einer Gruppe von zweiten Stäben kann der zwischen den zweiten Stäben und der Rückwand befindliche Zwischenraum von oben her mit Pflanzsubstrat befüllt werden. Dieses kann beispielsweise mit einer Schaufel durch die Einbauöffnung hindurch in den Zwischenraum hinter den zweiten Stäben eingefüllt werden.

Vorteilhaft ist, wenn die Einkerbungen - ausgehend von ihrem der Einbauöffnung zugewandten offenen Ende zu ihrem der Rückwand zugewandten geschlossenen Ende - eine nach unten weisende Komponente haben. Die zweiten Lamellen sind dann in der Ebene, in der sich der Lamellenrost erstreckt, beispielsweise um einen Winkel von etwa 45° um eine horizontale Achse verkippt. Hierdurch wird das Pflanzsubstrat, wenn es in den Hohlraum eingefüllt ist, besser von dem Lamellenrost zurückgehalten und dennoch können Pflanzen, die in dem Pflanzsubstrat wurzeln, durch die Pflanzöffnung(en) hindurch auf die dem Hohlraum abgewandte Seite des Wandbauteils hindurchwachsen.

Bei einer anderen vorteilhaften Ausgestaltung weist das Wandbauteil wenigstens ein Plattenteil auf, das von mindestens einer Pflanzöffnung quer zu der von dem Plattenteil aufgespannten Ebene durchsetzt wird, wobei das Plattenteil derart in die Einbauöffnung des Gehäuseteils einsetzbar und mit dem Gehäuseteil verbindbar ist, dass sich das Plattenteil in vertikaler Richtung erstreckt und zwischen der Pflanzöffnung und der Rückwand des Gehäuseteils mindestens ein Hohlraum gebildet ist, wobei das Plattenteil an mindestens einer Pflanzöffnung einen kragen- oder hülsenförmigen Vorsprung aufweist, der, wenn das Plattenteil in die Einbauöffnung eingesetzt ist, gegenüber einem dazu benachbarten rückseitigen Oberflächenbereich des Plattenteils zur Rückwand hin in den Hohlraum vorspringt und dort die Pflanzöffnung nach oben hin begrenzt. Wenn der zwischen dem Plattenteil und der Rückwand befindliche Hohlraum oberhalb der Pflanzöffnung mit Pflanzsubstrat befüllt wird, stützt der kragen- oder hülsenförmige Vorsprung auf ihn herabfallendes Pflanzsubstrat ab, damit dieses nicht unterhalb der Einfüllstelle durch die von dem kragenförmigen Vorsprung begrenzte Pflanzöffnung hindurch aus dem Hohlraum herausfallen bzw. herausrieseln kann. Dies ermöglicht ein einfaches Befüllen des Hohlraums mit dem Pflanzsubstrat. Das Plattenteil weist bevorzugt eine Dämmstoffschicht auf.

Bei einer bevorzugten Ausführungsform der Erfindung ist der der Rückwand zugewandte stirnseitige Rand des kragenförmigen Vorsprungs derart ausgestaltet ist, dass sein oberes Ende weiter zur Rückwand hin vorsteht als sein unteres Ende. Dabei ist der der Rückwand zugewandte stirnseitige Rand des kragenförmigen Vorsprungs vorzugsweise von der Rückwand beabstandet, damit die Innenhöhlung leichter mit dem Substrat befüllt werden und das Substrat - wenn es von oben in den Hohlraum eingefüllt wird - besser in unterhalb des kragenförmigen Vorsprungs befindliche Bereiche des Hohlraums gelangen kann.

Vorteilhaft ist, wenn zumindest ein die Pflanzöffnung nach oben hin begrenzender Teilbereich des kragenförmigen Vorsprungs mindestens eine Wasserdurchlassöffnung aufweist. Hierdurch kann Gieß- oder Regenwasser, das in dem oberhalb dieses Teilbereichs befindlichem Pflanzsubstrat angeordnet ist, durch die Wasserdurchlassöffnung(en) hindurch zu Pflanzen gelangen, die unterhalb des kragenförmigen Vorsprungs in dem Pflanzsubstrat wurzeln. Die mindestens eine Wasserdurchlassöffnung kann einen oder mehrere Schlitze und/oder eine Perforation aufweisen. Die Wasserdurchlassöffnungen sind so dimensioniert, dass sie das Substrat zurückhalten, aber für Wasser durchlässig sind. Die Schlitze haben vorzugsweise eine Breite von maximal 5 mm. Die Schlitze verlaufen bevorzugt parallel zur Rückwand bzw. zu der von dem Wandbauteil aufgespannten Ebene.

Bei einer bevorzugten Ausgestaltung der Erfindung weist der Bausatz eine Bewässerungseinrichtung mit mindestens einer Wasserleitung auf, die zum Bewässern des Pflanzsubstrats in der Innenhöhlung wenigstens eine vorzugsweise oberhalb der mindestens einen Pflanzöffnung angeordnete Wasseraustrittsöffnung hat. Wenn das begrünbare Wandelement in einer Wärmedämmverbundschicht eines Gebäudes angeordnet ist, kann die diese Wasserleitung mit einer Zuleitung verbunden sein, die frostgeschützt in oder hinter der Wärmedämmverbundschicht verläuft.

Nachfolgend sind Ausführungsbeispiele der Erfindung anhand der Zeichnung näher erläutert. Es zeigt:
- Fig. 1: eine dreidimensionale Darstellung eines Gehäuseteils eines Bausatzes zum Erstellen eines begrünbaren Wandelementseines Bausatzes, wobei das Gehäuseteil eine frontseitige Einbauöffnung und eine da hinter befindliche Innenhöhlung aufweist,
- Fig. 2: eine Darstellung ähnlich Fig. 1, wobei jedoch in der Innenhöhlung ein Lamellenrost angeordnet ist, das sich in vertikaler Richtung erstreckt,
- Fig. 3: einen Vertikalschnitt durch die in Fig. 2 dargestellte Anordnung entlang der in Fig. 8 mit IV bezeichneten Ebene,
- Fig. 4: einen vergrößerten Ausschnitt von Fig. 3, der einen Bereich um den oberen Rand der Einbauöffnung zeigt,
- Fig. 5: einen vergrößerten Ausschnitt von Fig. 3, den Bodenbereich des Gehäuseteils und das untere Ende des Lamellenrosts zeigt,
- Fig. 6: einen Horizontalschnitt durch die in Fig. 2 dargestellte Anordnung entlang der in Fig. 8 mit IV bezeichneten Ebene,
- Fig. 7: einen Teilquerschnitt durch ein an der Außenwand eines Gebäudes montiertes begrünbares Wandelement,
- Fig. 8: eine Vorderansicht auf die in Fig. 2 gezeigte Anordnung, wobei Befestigungsstellen in der Rückwand des Gehäuseteils strichliniert dargestellt sind,
- Fig. 9: eine Darstellung ähnlich Fig. 2, wobei jedoch anstelle der horizontalen Lamellen des Lamellenrosts ein Wandbauteil in der Innenhöhlung ist, das mehrere Plattenteile aufweist, die jeweils von mehreren Pflanzöffnungen durchsetzt werden,
- Fig. 10: einen Vertikalschnitt durch die in Fig. 9 dargestellte Anordnung entlang der in Fig. 12 mit X bezeichneten Ebene,
- Fig. 11: einen Horizontalschnitt durch die in Fig. 9 dargestellte Anordnung entlang der in Fig. 12 mit XI bezeichneten Ebene,
- Fig. 12: eine Vorderansicht auf die in Fig. 9 gezeigte Anordnung, wobei Befestigungsstellen in der Rückwand und verdeckte Kanten von die Pflanzöffnungen umgrenzenden Bauteilen strichliniert dargestellt sind,
- Fig. 13: einen Vertikalschnitt durch einen Teilbereich eines Plattenteils des Wandbauteils, wobei die Schnittebene orthogonal zu der von dem Plattenteil aufgespannten Ebene durch eine Pflanzöffnung verläuft, und
- Fig. 14: eine Aufsicht auf einen im Wesentlichen manschettenförmiges Bauteil, das in eine Lochung des Plattenteils eingesetzt ist und die Pflanzöffnung umgrenzt.

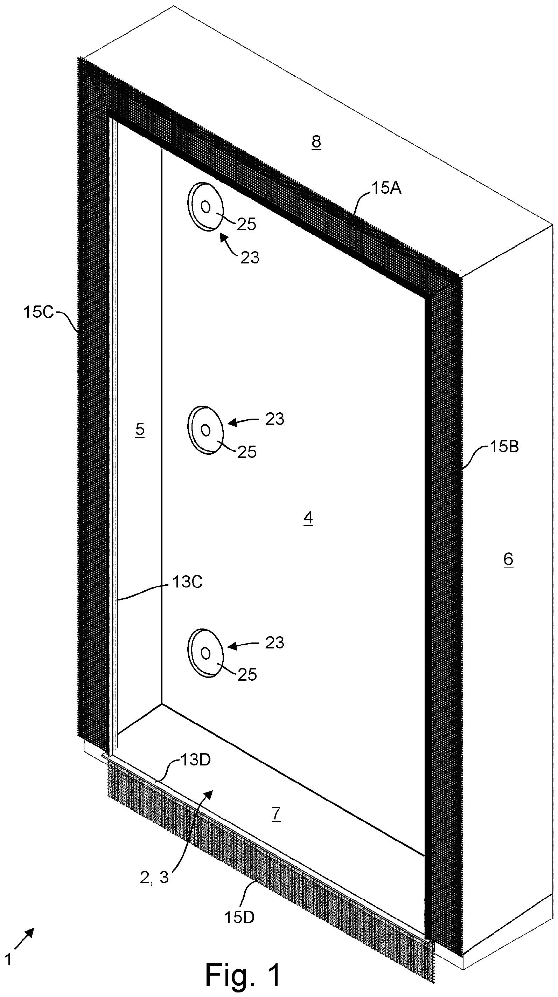

Ein Bausatz zum Erstellen eines begrünbaren Wandelements hat ein kastenförmiges Gehäuseteil 1 mit einer frontseitige Einbauöffnung 2 und einer dahinter befindlichen Innenhöhlung 3 (Fig. 1). Die Innenhöhlung 3 wird durch eine Rückwand 4, eine linke Seitenwand 5, eine rechte Seitenwand 6, einen Gehäuseboden 7 und eine obere Gehäusewand 8 des Gehäuseteils 1 begrenzt. Die Seitenwände 5, 6 sind parallel zueinander angeordnet und durch die Innenhöhlung 3 voneinander beabstandet. Wenn das begrünbare Wandelement an einem Gebäude montiert ist, sind die Seitenwände 5, 6 in Vertikalebenen angeordnet.

Der Gehäuseboden 7 und die obere Gehäusewand 8 sind ebenfalls durch die Innenhöhlung 3 voneinander beabstandet. Die Ebenen, in denen sich der Gehäuseboden 7 und die obere Gehäusewand 8 erstrecken, sind orthogonal zu den beiden von den Seitenwänden 5, 6 aufgespannten Ebenen und quer zu der von der Rückwand 4 aufgespannten Ebene angeordnet.

Die Rückwand 4, die Seitenwände 5, 6, der Gehäuseboden 7 und die obere Gehäusewand 8 sind jeweils wasserdicht ausgestaltet. Die Rückwand 4 ist mit den Seitenwänden 5, 6, dem Gehäuseboden 8 und der oberen Gehäusewand 8 jeweils wasserdicht verbunden. Außerdem sind die Seitenwände 5, 6 wasserdicht mit dem Gehäuseboden 7 und der oberen Gehäusewand 8 verbunden.

Das Gehäuseteil 1 hat außerdem eine vordere Gehäusewand 9, welche an die Einbauöffnung 2 angrenzt. Die vordere Gehäusewand 9 hat einen mit der oberen Gehäusewand 8 verbundenen und gegenüber dieser in Richtung zum oberen Rand der Einbauöffnung 2 hin vorstehenden oberen Wandungsbereich 9A, einen mit der rechten Seitenwand 6 verbundenen und gegenüber dieser in Richtung zum rechten Rand der Einbauöffnung 2 hin vorstehenden rechten Wandungsbereich 9B und einen mit der linken Seitenwand 5 verbundenen und gegenüber dieser in Richtung zum linken Rand der Einbauöffnung 2 hin vorstehenden linken Wandungsbereich 9C. Die vordere Gehäusewand 9 ist wasserdicht mit der der oberen Gehäusewand 8, der rechten Seitenwand 6 und der linken Seitenwand 5 verbunden.

Die Seitenwände 5, 6, der Gehäuseboden 7 und die obere Gehäusewand 8 weisen jeweils mindestens eine Schicht aus einem Dämmstoff auf. Der Dämmstoff der Rückwand 4 hat eine geringere Wärmeleitfähigkeit der Dämmstoff der Seitenwände 5, 6, des Gehäusebodens 7 und der oberen Gehäusewand 8. Der Dämmstoff der Seitenwände 5, 6, des Gehäusebodens 7 und der oberen Gehäusewand 8 kann mindestens eine Schicht aus extrudierten Polystyrol (XPS) und/oder aus Steinwolle umfassen. Die Schicht aus dem Dämmstoff ist zumindest an ihrer der Innenhöhlung 3 des Gehäuseteils 1 zugewandten inneren Oberfläche mit einer wasserdichten PVC-Dichtfolie beschichtet.

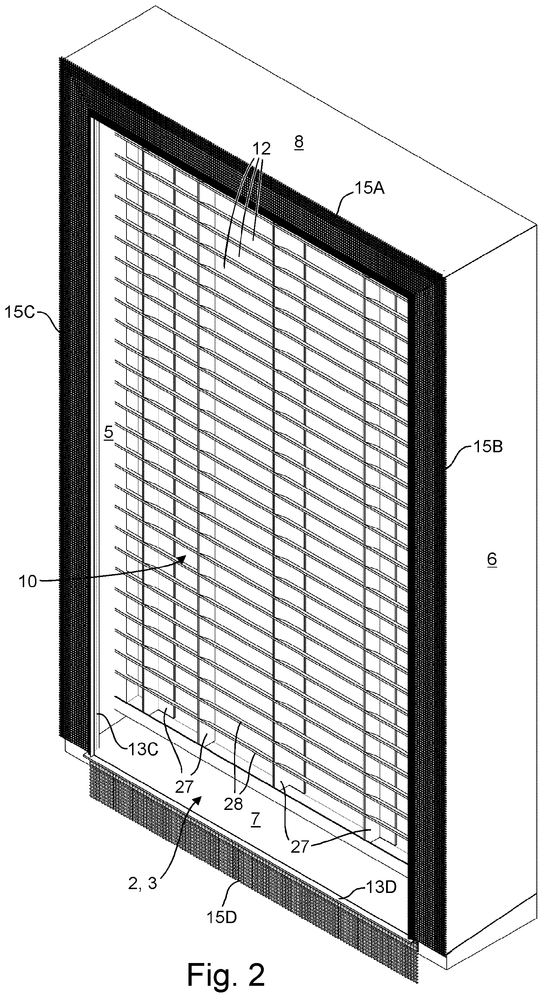

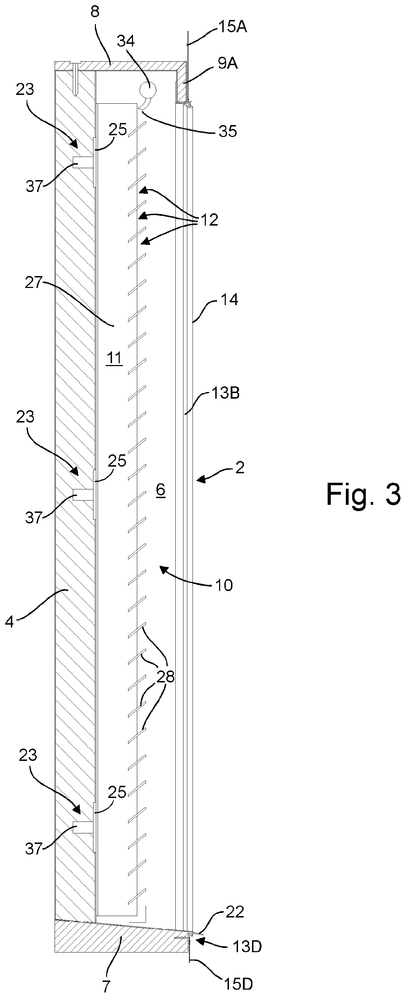

Wie in Fig. 2 und 3 zu sehen ist, weist der Bausatz zum Erstellen des begrünbaren Wandelements außerdem ein Wandbauteil 10 auf, das in Gebrauchsstellung derart in der Innenhöhlung 3 des Gehäuseteils 1 angeordnet ist, dass die Ebene, in der sich das Wandbauteil 10 erstreckt, parallel zu der von der Rückwand 4 aufgespannten Ebene und mit seinen Längsrändern parallel zu den von den Seitenwänden aufgespannten Ebenen angeordnet ist. Das Wandbauteil 10 ist in die Einbauöffnung 2 des Gehäuseteils 1 einsetzbar, lösbar mit dem Gehäuseteil 1 verbindbar und aus diesem entnehmbar. Wenn das Wandbauteil 10 mit dem Gehäuseteil 1 verbunden ist, ist zwischen dem Wandbauteil 10 und der Rückwand 4 mindestens ein Hohlraum 11 gebildet, der mit einem Pflanzsubstrat befüllbar ist. Das Pflanzsubstrat kann beispielsweise Blumenerde sein.

Das Wandbauteil 10 hat mehrere Pflanzöffnungen 12, durch die hindurch Pflanzen, die in dem in dem Hohlraum 11 befindlichen Pflanzsubstrat wurzeln, auf die dem Hohlraum 11 abgewandte Vorderseite des Wandbauteils hindurchwachsen können.

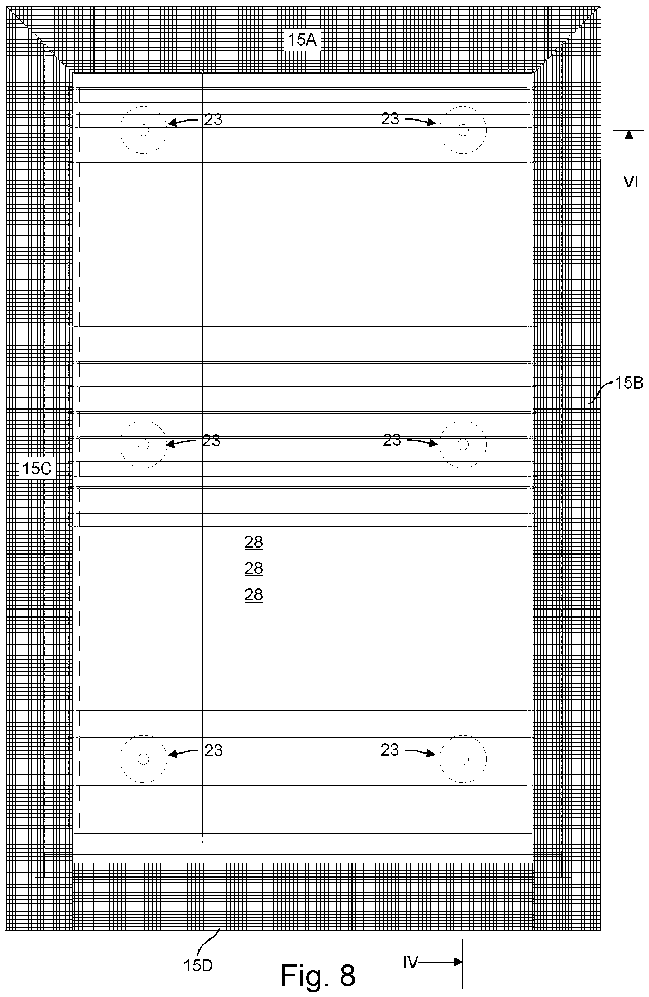

Zum Integrieren des begrünbaren Wandelements in eine auf einer Außenwand eines Gebäudes angeordnete Wärmedämmverbundschicht sind an dem die Einbauöffnung umgrenzenden Rand des Gehäuseteils Putzanschlussprofile 13A, 13B, 13C, 13D vorgesehen, die jeweils eine Putzabziehkante 14 aufweisen und jeweils mit einem ihnen zugeordneten Einputz-Gewebe 15A, 15B, 15C, 15D verbunden sind (Fig. 8). Ein oberes Putzanschlussprofil 13A ist an dem der Rückwand 4 abgewandten vorderen Rand der oberen Gehäusewand 8, ein rechtes Putzanschlussprofil 13B ist an dem der Rückwand 4 abgewandten vorderen Rand der rechten Seitenwand 6, ein linkes Putzanschlussprofil 13C ist an dem der Rückwand 4 abgewandten vorderen Rand der linken Seitenwand 5 und ein unteres Putzanschlussprofil 13D an dem der Rückwand 4 abgewandten vorderen Rand des Gehäusebodens 7 angeordnet. Das obere Putzanschlussprofil 13A und das untere Putzanschlussprofil 13D erstrecken sich jeweils durchgängig vom linken Putzanschlussprofil 13C zum rechten Putzanschlussprofil 13B.

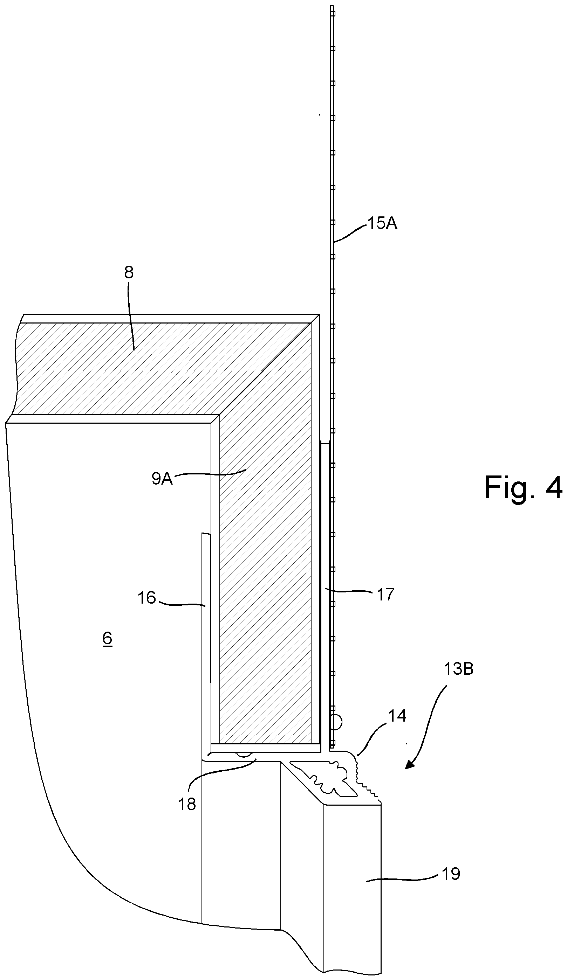

Wie in Fig. 4 zu sehen ist, hat das obere Putzanschlussprofil 13A zwei parallel zueinander verlaufende Schenkelteile 16, 17, die durch einen U-Quersteg 18 U-förmig miteinander verbunden sind. Zwischen den Schenkelteilen 16, 17 ist der obere Wandungsbereich 9A derart angeordnet, dass das innere Schenkelteil 16 an der der Innenhöhlung 3 zugewandten Innenfläche des oberen Wandungsbereich 9A und das äußere Schenkelteil 17 an der der Innenhöhlung 3 abgewandten Außenfläche des oberen Wandungsbereich 9A zu Anlage kommt. Hierdurch ist das obere Putzanschlussprofil 13A formschlüssig mit dem an die Einbauöffnung 2 angrenzenden Rand des oberen Wandungsbereichs 9A verbunden.

In entsprechender Weise ist das rechte Putzanschlussprofil 13B mit dem an die Einbauöffnung 2 angrenzenden Rand des rechten Wandungsbereichs 9B und das linke Putzanschlussprofil 13B mit dem an die Einbauöffnung 2 angrenzenden Rand des linken Wandungsbereichs 9C formschlüssig verbunden. Das rechte Putzanschlussprofil 13B und das linke Putzanschlussprofil 13C weisen dazu jeweils ebenfalls zwei parallel zueinander verlaufende Schenkelteile 16, 17 auf, die durch einen U-Quersteg 18 U-förmig miteinander verbunden sind. Bei Bedarf können die Putzanschlussprofile 13A, 13B, 13C mit dem an die Einbauöffnung 2 angrenzenden Rand des entsprechenden Wandungsbereichs 9B verklebt sein.

An der den Schenkelteilen 16, 17 abgewandten Innenseite des U-Querstegs 18 der Putzanschlussprofile 13A, 13B, 13C ist jeweils eine Randleiste 19 an den U-Quersteg 18 angeformt, die an die Einbauöffnung angrenzt. In Fig. 4 ist zu sehen, dass die Randleiste 19 als Hohlkammerprofil mit im Wesentlichen rechteckförmigem Querschnitt ausgestaltet ist. Außerdem ist in Fig. 4 erkennbar, dass die Putzabziehkante 14 wulstförmig ausgestaltet ist und gegenüber der der vorderen Wand 9 des Gehäuseteils 1 abgewandten vorderseitigen Oberfläche des äußeren Schenkelteils 17 von der Innenhöhlung 3 weg vorsteht.

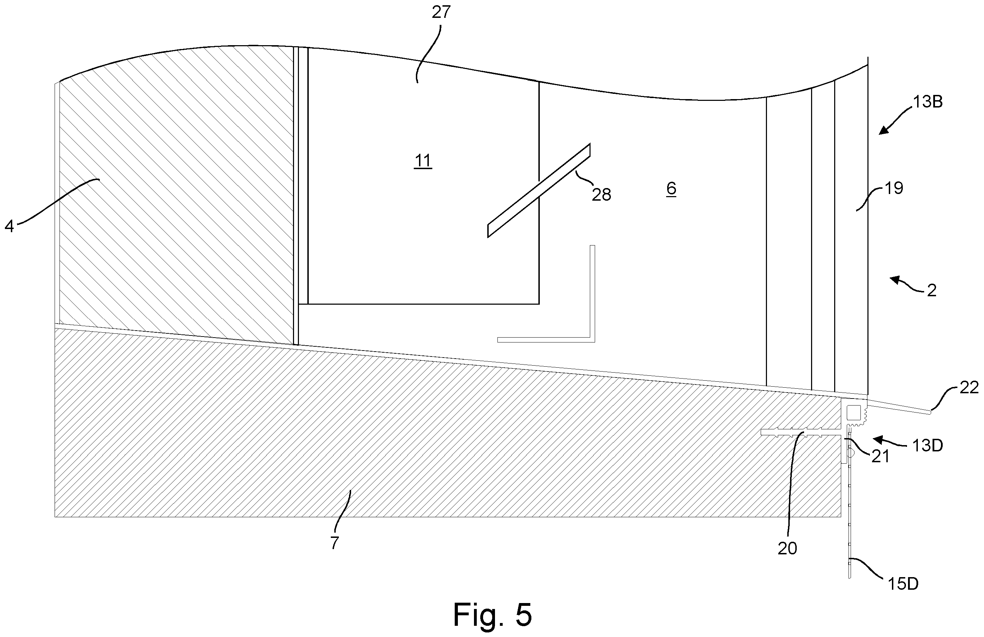

Das Einputz-Gewebe 15A, 15B, 15C, 15D überdeckt jeweils die der vorderen Wand 9 des Gehäuseteils 1 abgewandte vorderseitige Oberfläche des betreffenden äußeren Schenkelteils 17 und ist mit diesem verschweißt und/oder auf andere Weise fest verbunden. Die Einputz-Gewebe 15A, 15B, 15C, 15D sind in einer Ebene angeordnet, die etwa parallel zu der von der vorderen Wand 9 bzw. der Einbauöffnung 2 aufgespannten Ebene verläuft (Fig. 4 und 5). Der von der Einbauöffnung 2 entfernte Randbereich des Einputz-Gewebes 15A, 15B, 15C, 15D steht jeweils über die Außenkontur des Gehäuseteils 1 über. Wenn das Gehäuseteil 1 in eine Wärmedammverbundschicht eines Gebäudes eingebaut wird, überdecken diese Randbereiche an das Gehäuseteil 1 angrenzende Dämmstoffplatten der Wärmedammverbundschicht, so dass die die Dämmstoffplatten und die vordere Gehäusewand 9 durchgängig und unterbrechungsfrei bis an die Einbauöffnung 2 bzw. bis an die Putzanschlussprofile 13A, 13B, 13C, 13D verputzt werden können.

Wie in Fig. 5 zu sehen ist, ist das untere Putzanschlussprofil 13D als Einsteckprofil ausgestaltet, das einen Einsteckschenkel 20 aufweist, der in eine in die vordere Stirnseite des Gehäusebodens 7 eingelassene Nut eingesetzt und dort mit Hilfe von Klebstoff fixiert ist. Außerdem weist das untere Putzanschlussprofil 13D einen T-Quersteg 21 auf, der T-förmig mit dem Einsteckschenkel 20 verbunden ist. An den an die Einbauöffnung 2 angrenzenden Randbereich des T-Querstegs 21 ist ein etwa quadratisches Hohlkammerprofil angeformt, das gegenüber der vorderen Stirnseitenfläche des Gehäusebodens 7 vorsteht und die Putzabziehkante 14D bildet. Der untere Randbereich des T-Querstegs 21 ist mit einem unteren Einputz-Gewebe 15D verschweißt und/oder auf andere Weise fest verbunden.

In Fig. 5 ist außerdem erkennbar, dass an dem untere Putzanschlussprofil 13D eine sich entlang des unteren Rands der Einbauöffnung 2 ersteckende Tropfleiste 22 vorgesehen ist, deren der Rückwand 4 abgewandter Randbereich eine nach unten weisende Komponente hat und gegenüber der durch die Putzabziehkanten 14, 14 aufgespannten Ebene vorsteht. Der Überstand des Randbereichs über diese Ebene beträgt vorzugsweise etwa 10 mm und ist derart dimensioniert, dass Tropfwasser, welches aus der Einbauöffnung über die Tropfleiste 22 nach unten läuft, nicht mit der Außenfassade des Gebäudes in Kontakt gerät.

Zum Befestigen des Gehäuseteils 1 an einer Gebäude-Außenwand (z.B. Mauerwerk, Betonwand usw.) sind an der Rückwand des Gehäuseteils 1 Befestigungsstellen 4 vorgesehen, an denen die Rückwand 4 durchsetzende Befestigungselemente zum Verankern in der Gebäude-Außenwand anbringbar sind. Die Befestigungsstellen 23 sind derart an der Rückwand 4 angeordnet, dass eine statisch sichere Verankerung des Gehäuseteils 1 an der Außenwand gewährleistet ist, wenn als Befestigungselemente WDVS-Dübel verwendet werden, die an den Befestigungsstellen 23 durch die Rückwand hindurch in die Außenwand eingebracht und in dieser verankert werden.

Der Bausatz zum Erstellen des begrünbaren Wandelements weist Abdeckungen 24 für die Befestigungsstellen 23 auf, die wasserdicht mit dem die Befestigungsstelle 23 umgrenzenden Wandungsbereich der Rückwand 4 verbindbar sind. Die Abdeckungen 24 sind als Butyl-Pflaster ausgestaltet, das eine wasserdichte Folie aufweist, die an einer Seite mit einer an der Folie haftenden Klebstoffschicht zum Verbinden mit der Rückwand 4 des Gehäuseteils beschichtet ist. Die Klebstoffschicht ist mit einer Schutzfolie abgedeckt, die bei der Monate des Bausatzes zum Ankleben des Butyl-Pflasters an die Rückwand 4 von der Folie abziehbar ist.

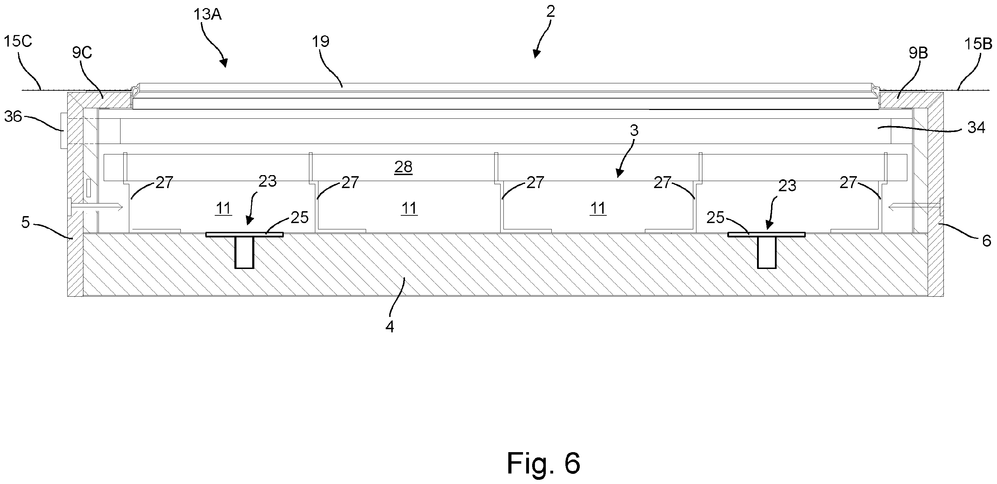

Wie in Fig. 3 und 6 zu sehen ist, weisen die Befestigungsstellen 23 jeweils eine Senkung 25 auf, die in die der Innenhöhlung 3 des Gehäuseteils 1 zugewandte vorderseitige Oberfläche der Rückwand eingelassen ist. Die Abmessungen der Senkung 25 sind derart gewählt, dass in der Senkung 25 ein Dübelkopf eines WDVS-Dübels 26 vollständig versenkbar ist.

In den Boden der Senkung 25 ist ein Sackloch eingelassen, durch das hindurch die Rückwand 4 mittels eines Bohrhammers orthogonal zu der von ihr aufgespannten Ebene durchbohrbar und/oder durchstoßbar ist. Das Sackloch ist mittig zu der Senkung 25 angeordnet und der Durchmesser des Sacklochs entspricht etwa dem Durchmesser des Schafts des WDVS-Dübels 26.

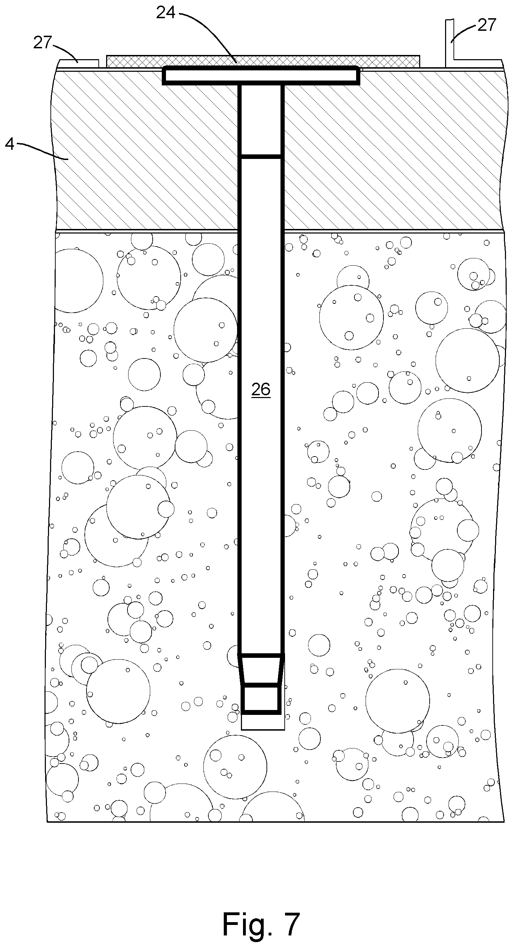

Bei dem in Fig. 2 bis 8 gezeigten Ausführungsbeispiel sind in der Innenhöhlung 3 des Gehäuseteils 1 mehrere an diesem befestigte erste Stäbe 27 angeordnet sind, die sich in vertikale Richtung erstrecken und quer zu ihrer Längserstreckung zueinander versetzt nebeneinander angeordnet. Das Wandbauteil 10 weist eine Vielzahl von zweiten Stäben 28 auf, die derart quer zu den ersten Stäben 27 in die Innenhöhlung 3 des Gehäuseteils 1 einsetzbar und in dieser derart mit den mit den ersten Stäben 27 zu einem Lamellenrost verbindbar sind, dass die Pflanzöffnungen 12 jeweils durch benachbarte vertikale Stäbe 27 und horizontale Stäbe 28 umgrenzt sind.

Die ersten Stäbe 27 sind an ihren Befestigungsflanschen mit Hilfe von Klebstoff an der Rückwand 4 befestigt. Bei Bedarf können sie zusätzlich mit der Rückwand 4, dem Gehäuseboden 7 und/oder der oberen Gehäusewand 8 formschlüssig verbunden sein.

Wenn die zweiten Stäbe 28 in die Einkerbungen der ersten Stäbe 27 eingesetzt sind, hintergreifen sie mit ihrem einen Axialende den linken Wandungsbereich 9C der vorderen Gehäusewand 9 und mit ihrem anderen Axialende den rechten Wandungsbereich 9B der vorderen Gehäusewand 9. Die horizontale Abmessung der zweiten Stäbe 28 ist also größer als die lichte Weite, welche die Einbauöffnung 2 in horizontale Richtung bzw. parallel zu dem Gehäuseboden 7 aufweist.

Die ersten Stäbe 27 sind jeweils als Winkelprofile mit einem Befestigungsflansch zum Fixieren an der Rückwand 4 und mit einem quer zu dem Befestigungsflansch angeordneten Verbindungsschenkel ausgestaltet. Letzterer hat eine Vielzahl von in vertikaler Richtung parallel zueinander versetzen Einkerbungen, die jeweils zur Einbauöffnung 2 hin offen sind. Ausgehend von ihrem offenen Ende zu ihrem gegenüberliegenden geschlossenen Ende haben die Einkerbungen jeweils eine nach unten weisende Komponente. Hierdurch haben die zweiten Stäbe 28, wenn sie mit den ersten Stäben zu dem Lamellenrost verbunden sind - ausgehend von der Einbauöffnung 2 zur Rückwand 4 hin - eine nach unten weisende Komponente (Fig. 3 und 5). Dadurch wird verhindert, dass das Pflanzsubstrat, wenn es von oben in den zwischen dem Wandbauteil 10 und der Rückwand 4 befindlichen Hohlraum 11 eingefüllt wird, aus den Pflanzöffnungen 12 herausrieselt.

Bei der Montage des Wandbauteils 10 werden zunächst die untersten zweiten Stäbe 28 in die ihnen zugeordneten Einkerbungen der ersten Stäbe 27 eingesetzt und danach wird der zwischen diesen zweiten Stäben und der Rückwand 4 gebildete Hohlraum mit Substrat befüllt. Danach werden darüber weitere zweite Stäbe 28 an den ersten Stäben 27 montiert, um anschließend den zwischen den weiteren zweiten Stäben 28 und der Rückwand 4 befindlichen Hohlraum 11 ebenfalls mit Substrat zu befüllen. Bei Bedarf werden die vorstehend genannten Schritte wiederholt, bis sämtliche zweite Stäbe 28 in der Innenhöhlung eingebaut und mit Pflanzsubstrat hinterfüllt sind. Danach können Pflanzen durch die Pflanzöffnungen 12 hindurch in des Pflanzsubstrat eingepflanzt werden.

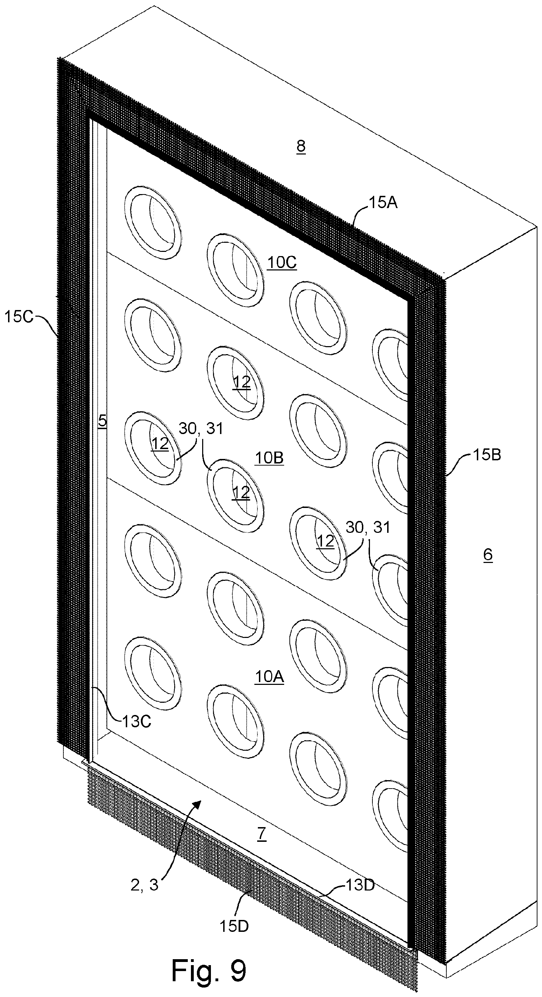

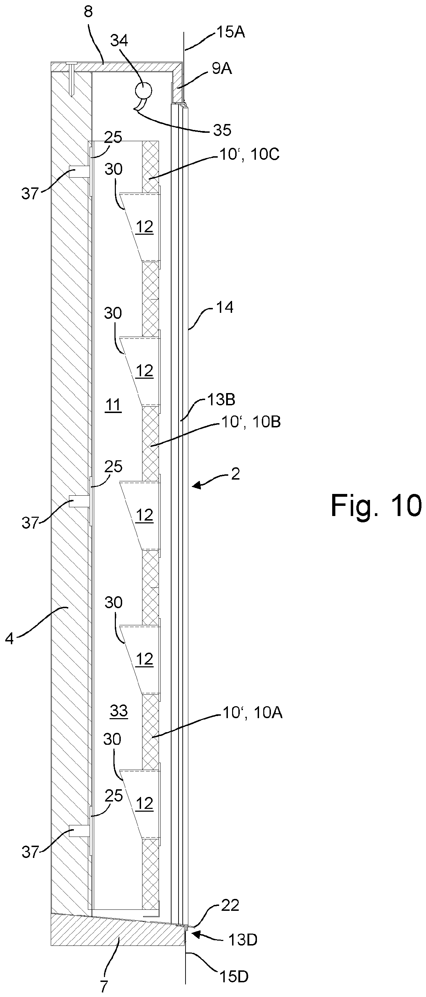

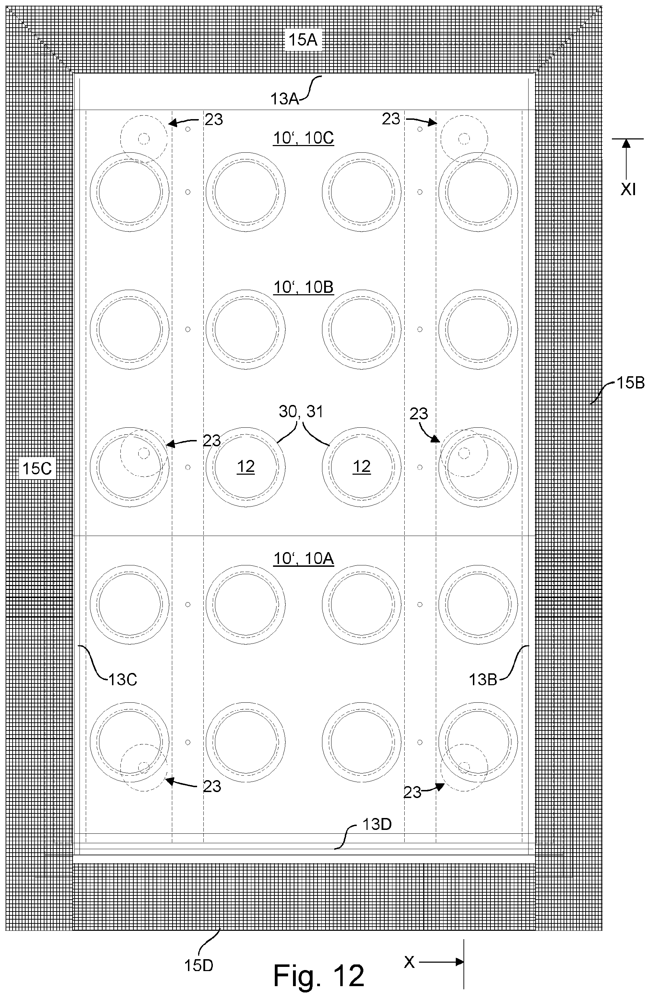

Bei einem weiteren, in Fig. 9 bis 14 abgebildeten Ausführungsbeispiel der Erfindung weist das Wandbauteil 10' anstelle der zweiten Stäbe 28 mehrere Plattenteile 10A, 10B, 10C auf, die jeweils von mehreren Pflanzöffnungen 12 quer zu der von dem Plattenteil 10A, 10B, 10C aufgespannten Ebene durchsetzt werden. Die Plattenteile 10A, 10B, 10C sind jeweils derart in die Einbauöffnung 2 des Gehäuseteils 1 einsetzbar und mit dem Gehäuseteil 1 verbindbar, dass sich die Plattenteile 10A, 10B, 10C in vertikaler Richtung erstrecken und zwischen den Pflanzöffnungen 12 und der Rückwand 4 des Gehäuseteils 1 mindestens ein Hohlraum 11 gebildet ist, der mit Pflanzsubstrat befüllbar ist. Wenn die Plattenteile 10A, 10B, 10C in die Innenhöhlung 3 des Gehäuseteils 1 eingebaut sind, hintergreifen sie mit ihrem einen Axialende den linken Wandungsbereich 9C der vorderen Gehäusewand 9 und mit ihrem anderen Axialende den rechten Wandungsbereich 9B der vorderen Gehäusewand 9. Die horizontale Abmessung der Plattenteile 10A, 10B, 10C ist also größer als die lichte Weite, welche die Einbauöffnung 2 in horizontale Richtung bzw. parallel zu dem Gehäuseboden 7 aufweist.

Der Aufbau des Gehäuseteils entspricht bei dem in den Fig. 9 bis 12 gezeigten Ausführungsbeispiel im Wesentlichen dem in den Fig, 1 bis 8 gezeigten Ausführungsbeispiel, so dass die Beschreibung insoweit für das zuletzt genannte Ausführungsbeispiel für das zuerst genannte Ausführungsbeispiel entsprechend gilt.

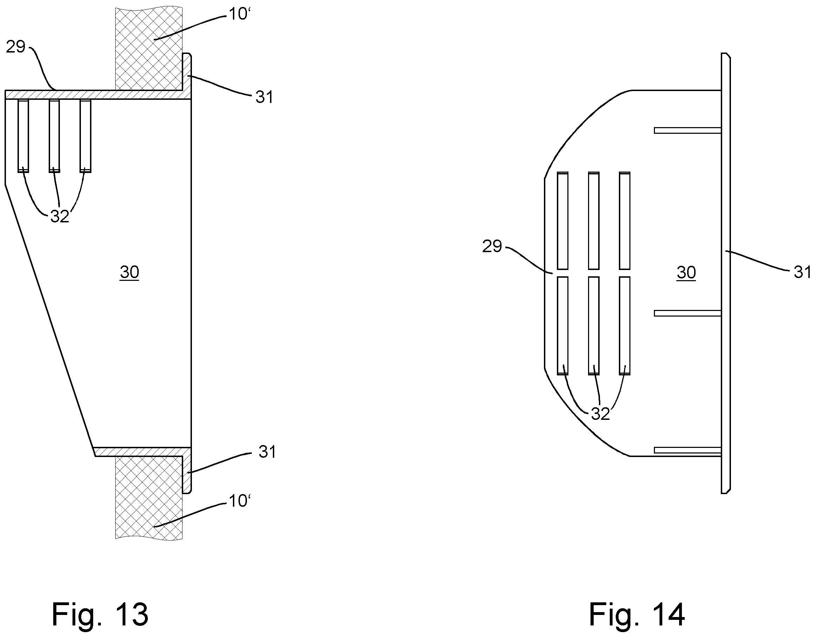

Wie in Fig. 9 bis 11 zu sehen ist, weisen die Plattenteile 10A, 10B, 10C an jeder Pflanzöffnung 12 jeweils einen kragenförmigen bzw. hülsenförmigen Vorsprung 29 auf, der, wenn das Plattenteil 10A, 10B, 10C in die Einbauöffnung 2 eingesetzt ist, gegenüber einem dazu benachbarten rückseitigen Oberflächenbereich des Plattenteils 10A, 10B, 10C zur Rückwand 4 hin in den Hohlraum 11 vorspringt und dort die Pflanzöffnung 12 nach oben hin begrenzt. Der Vorsprung 29 ist jeweils an einem manschettenförmigen Bauteil 30 angeordnet, das in den Fig. 13 und 14 dargestellt ist. Die Plattenteile 10A, 10B, 10C haben für jede Pflanzöffnung 12 jeweils einen Durchbruch, den ein Abschnitt des manschettenförmigen Bauteils 30 durchsetzt. Jedes manschettenförmige Bauteil 30 hat an seinem einen Axialende jeweils einen flanschartigen Rand 31, mit dem es an der Vorderseite des Plattenteils 10A, 10B, 10C flächig zur Anlage kommt.

Der an der Rückseite des Plattenteils 10A, 10B, 10C überstehende Vorsprung 29 ist an dem von dem flanschartigen Rand 31 entfernten Ende des manschettenförmigen Bauteils 30 vorgesehen und an seiner Stirnseite bereichsweise derart abgeschrägt und an dem Plattenteil 10A, 10B, 10C angeordnet, dass das obere Ende des manschettenförmigen Bauteils 30 weiter zur Rückwand 4 hin vorsteht als sein unteres Ende. Wie in Fig. 13 und 14 zu sehen ist, weist ein die Pflanzöffnung 12 nach oben hin begrenzender Teilbereich des kragenförmigen Vorsprungs 29 schlitzförmige Wasserdurchlassöffnungen 32 auf.

Beim Einbau des Wandbauteils 10' in die Innenhöhlung 3 wird zunächst das untere Plattenteil 10A in die Innenhöhlung 3 eingebaut und dann wird durch die Einbauöffnung 2 hindurch der zwischen dem Plattenteil 10A und der Rückwand gebildete Hohlraum 11 von oben mit Pflanzsubstrat befüllt. An der Rückwand 4 des Gehäuseteils sind in die Innenhöhlung 3 ragende Haltevorsprünge 33 vorgesehen, die mit der Rückwand 4 fest verbunden sind und an denen die Plattenteile 10A, 10B, 10C in Montagestellung zur Anlage kommen. Die Haltevorsprünge 33 bestehen vorzugsweise aus recyceltem PVC. Durch die Plattenteile 10A, 10B, 10C werden von der Einbauöffnung 2 aus Schrauben geschraubt, die in die Haltevorsprünge 33 eingreifen.

In einem weiteren Montageschritt wird das mittlere Plattenteil 10B in die Innenhöhlung 3 eingebaut und der zwischen diesem und der Rückwand gebildete Hohlraum 11 wird von oben mit Pflanzsubstrat befüllt. Danach wird das obere Plattenteil 10C eingebaut und in entsprechender Weise mit Pflanzsubstrat hinterfüllt. Durch die Pflanzöffnungen 12 hindurch können in des Pflanzsubstrat eingepflanzt werden.

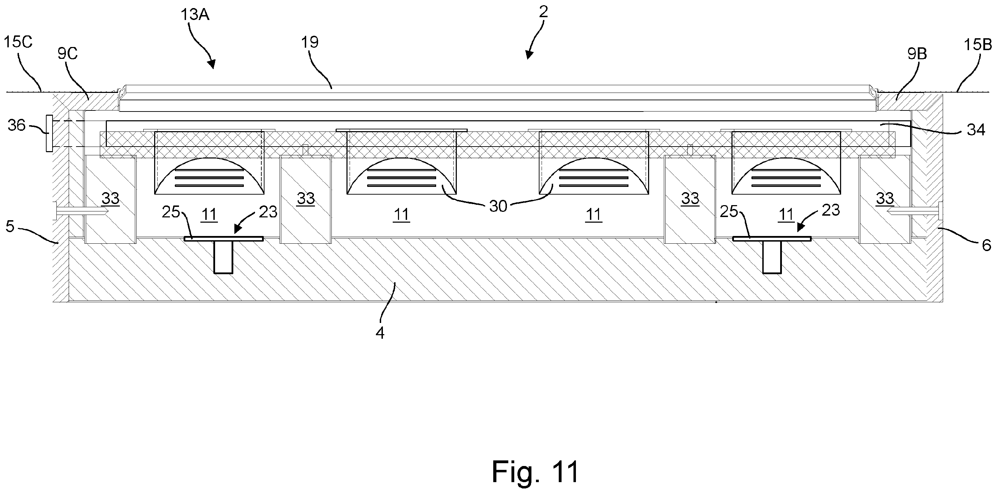

Wie in Fig. 3 und 11 zu sehen ist, hat der Bausatz eine Bewässerungseinrichtung mit einer Wasserleitung 34, die zum Bewässern des Pflanzsubstrats in dem zwischen dem oberen Wandungsbereich 9A der vorderen Gehäusewand 9 und der Rückwand 4 befindlichen Teil der Innenhöhlung 3 angeordnet ist. Die Wasserleitung 34 verläuft im Wesentlichen parallel zur Rückwand 4 und parallel zum Gehäuseboden 7 und weist mehrere in Längsrichtung der Wasserleitung 33 voneinander beabstandete Wasseraustrittsöffnungen 35 auf, durch die Gießwasser auf das Pflanzsubstrat abgegeben werden kann. Die Wasseraustrittsöffnungen 35 sind oberhalb des Hohlraums 11 angeordnet.

An einer Seitenwand 9C der Gehäuseteils 1 hat die Wasserleitung 34 einen Wasseranschluss 36, der mit einer Zuleitung verbindbar ist. Wenn das begrünbare Wandelement in eine Wärmedämmverbundschicht eines Gebäudes integriert ist, ist der Wasseranschluss 36 innerhalb der Wärmedämmverbundschicht mit Abstand zu der dem Gebäude abgewandten Außenfläche der Wärmedämmverbundschicht angeordnet.

## Patentansprüche

1. Bausatz zum Erstellen eines begrünbaren Wandelements, mit einem Gehäuseteil (1), das eine frontseitige Einbauöffnung (2) und eine Innenhöhlung (3) aufweist, die durch eine Rückwand (4), eine linke Seitenwand (5), eine rechte Seitenwand (6) und einen Gehäuseboden (7) des Gehäuseteils (1) begrenzt wird, wobei die Rückwand (4), die Seitenwände (5, 6) und der Gehäuseboden (7) wasserdicht ausgestaltet und die Rückwand (4) mit den Seitenwänden (5, 6) und dem Gehäuseboden (7) und dieser mit den Seitenwänden (5, 6) wasserdicht verbunden ist, mit wenigstens einem, mindestens eine Pflanzöffnung (12) aufweisenden Wandbauteil (10, 10'), das derart in die Einbauöffnung (2) des Gehäuseteils (1) einsetzbar und mit diesem verbindbar ist, dass sich das Wandbauteil (10, 10') in vertikaler Richtung erstreckt und zwischen der von der Pflanzöffnung (12) aufgespannten Fläche und der Rückwand (4) des Gehäuseteils (1) mindestens ein Hohlraum (11) gebildet ist, der derart mit einem Pflanzsubstrat befüllbar ist, dass eine in dem Pflanzsubstrat wurzelnde Pflanze durch die Pflanzöffnung (12) hindurch auf die dem Hohlraum (11) abgewandte Vorderseite des Wandbauteils (10, 10') hindurchwachsen kann, wobei zumindest die Rückwand (4) des Gehäuseteils (1) wärmedämmend ausgestaltet ist, wobei das Gehäuseteil (1) eine mit der Rückwand (4) und den Seitenwänden (5, 6) verbundene obere Gehäusewand (8) aufweist, welche die Innenhöhlung (3) des Gehäuseteils (1) nach oben hin begrenzt, und wobei an der Rückwand (4) des Gehäuseteils (1) Befestigungsstellen (23) vorgesehen sind, an denen die Rückwand (4) durchsetzende Befestigungselemente zum Verankern in der Außenwand des Gebäudes anbringbar sind,
**dadurch gekennzeichnet,**
**dass** zum Integrieren des begrünbaren Wandelements in eine auf einer Außenwand eines Gebäudes angeordnete Wärmedämmverbundschicht an dem die Einbauöffnung (2) umgrenzenden Rand des Gehäuseteils (1) Putzanschlussprofile (13A, 13B, 13C, 13D) vorgesehen sind, die eine Putzabziehkante (14, 14D) aufweisen und mit mindestens einem Einputz-Gewebe (15A, 15B, 15C, 15D) verbunden sind, dass das oder die Einputz-Gewebe (15A, 15B, 15C, 15D) zum Einputzen in eine auf eine an das Wandelement angrenzende Dämmstoffschicht der Wärmedämmverbundschicht aufzubringende Putzschicht allseitig über die Außenkontur des Gehäuseteils (1) übersteht, dass der Bausatz Abdeckungen (24) für die Befestigungsstellen (23) aufweist, welche wasserdicht mit dem die Befestigungsstelle (23) umgrenzenden Wandungsbereich der Rückwand (4) verbindbar sind, und dass an dem Gehäuseteil (1) eine sich entlang des unteren Rands der Einbauöffnung (2) ersteckende Tropfleiste (22) vorgesehen ist, deren der Rückwand (4) abgewandter Randbereich gegenüber der durch die Putzabziehkanten (14) der Putzanschlussprofile (13A, 13B, 13C, 13D) aufgespannten Ebene vorsteht.

2. Bausatz nach Anspruch 1, **dadurch gekennzeichnet, dass** die Befestigungsstellen (23) jeweils eine in die der Innenhöhlung (3) des Gehäuseteils (1) zugewandte vorderseitige Oberfläche der Rückwand (4) eingelassene Senkung (25) aufweist.

3. Bausatz nach Anspruch 2, **dadurch gekennzeichnet, dass** die Senkung (25) jeweils einen Boden und eine Umfangswand aufweist, die einen Aufnahmeraum für ein Kopfteil des Befestigungselements begrenzen, dass in den Boden der Senkung (25) ein Sackloch eingelassen ist, durch das hindurch die Rückwand (4) orthogonal zu der von ihr aufgespannten Ebene durchbohrbar und/oder durchstoßbar ist, oder dass im Boden der Senkung (25) ein Durchtrittsloch angeordnet ist, und dass das Sackloch oder das Durchtrittsloch von der Umfangswand der Senkung (25) beabstandet und bevorzugt mittig zu dieser angeordnet ist.

4. Bausatz nach Anspruch 2 oder 3, **dadurch gekennzeichnet, dass** die Abmessungen der Senkung (25) derart gewählt sind, dass in der Senkung (25) ein Dübelkopf eines WDVS-Dübels (26) vollständig versenkbar ist, vorzugsweise derart, dass der Dübelkopf bündig mit der der Innenhöhlung (3) des Gehäuseteils (1) zugewandten vorderseitigen Oberfläche des die Senkung (25) umgrenzenden Wandungsbereichs der Rückwand (4) angeordnet ist.

5. Bausatz nach einem der Ansprüche 1 bis 4, **dadurch gekennzeichnet, dass** die Abdeckungen (24) für die Befestigungsstellen (23) als Pflaster ausgestaltet sind, das eine wasserdichte Folie aufweist, die an einer Seite mit einer an der Folie haftenden Klebstoffschicht zum Verbinden mit der Rückwand (4) des Gehäuseteils (1) beschichtet ist, und dass die Klebstoffschicht durch eine abziehbare Schutzfolie abgedeckt ist.

6. Bausatz nach einem der Ansprüche 1 bis 5, **dadurch gekennzeichnet**,
**dadurch gekennzeichnet, dass** die Seitenwände (5, 6), der Gehäuseboden (7) und die obere Gehäusewand (8) mindestens eine Schicht aus einem wärmedämmenden Material aufweisen, und dass die Rückwand vorzugsweise eine geringere Wärmeleitfähigkeit aufweist als dieses Material.

7. Bausatz nach einem der Ansprüche 1 bis 6, **dadurch gekennzeichnet, dass** die wärmedämmend ausgestaltete Rückwand (4)
- mindestens eine Schicht aus einem Aerogel und/oder
- mindestens eine Schicht aus Polyurethan-Hartschaum und/oder
- mindestens eine Schicht aus Polyester-Hartschaum aufweist und/oder
- mindestens eine Schicht aus Steinwolle aufweist und/oder
- mindestens eine Schicht aus einem nachwachsenden Dämmstoff, insbesondere Kork und/oder Holzweichfaser aufweist oder
- als Vakuumpanel ausgestaltet ist.

8. Bausatz nach einem der Ansprüche 1 bis 7, **dadurch gekennzeichnet, dass** die Rückwand (4) und/oder die Seitenwände (5, 6) und/oder der Gehäuseboden (7) und/oder die obere Gehäusewand (8) mindestens eine Schicht aus einem Dämmstoff aufweist, die an ihrer der Innenhöhlung (3) des Gehäuseteils (1) zugewandten inneren Oberfläche und/oder an ihrer der Innenhöhlung (3) abgewandten äußeren Oberfläche mit einer wasserdichten Schicht beschichtet ist, insbesondere einer PVC-Dichtfolie oder einer PVC-Platte.

9. Bausatz nach einem der Ansprüche 1 bis 8, **dadurch gekennzeichnet, dass** das Gehäuseteil (1) eine vordere Gehäusewand (9) aufweist, welche an die Einbauöffnung (2) angrenzt,
- dass die vordere Gehäusewand (9) einen mit der linken Seitenwand (5) verbundenen und gegenüber dieser in Richtung zum linken Rand der Einbauöffnung (2) hin vorstehenden linken Wandungsbereich (9C) hat, hinter den sich die Innenhöhlung (3) des Gehäuseteils (1) erstreckt,
- dass die vordere Gehäusewand (9) einen mit der rechten Seitenwand (6) verbundenen und gegenüber der rechten Seitenwand (6) in Richtung zu einem rechten Rand der Einbauöffnung (2) hin vorstehenden rechten Wandungsbereich (9B) hat, hinter den sich die Innenhöhlung (3) des Gehäuseteils (1) erstreckt,
und dass das Wandbauteil (10, 10'), wenn es in die Einbauöffnung (2) des Gehäuseteils eingesetzt und mit diesem verbunden ist, sich in der Innenhöhlung (3) bis hinter den linken und den rechten Wandungsbereich (9C, 9B) der vorderen Gehäusewand (8) erstreckt.

10. Bausatz nach einem der Ansprüche 1 bis 9, **dadurch gekennzeichnet, dass** in der Innenhöhlung (3) des Gehäuseteils (1) mindestens zwei erste Stäbe (27) angeordnet sind, die sich in vertikale Richtung erstrecken und an dem Gehäuseteil (1) fixiert sind, dass das Wandbauteil (10) mehrere zweite Stäbe (28) aufweist, die derart quer zu den ersten Stäben (27) in die Innenhöhlung (3) des Gehäuseteils (1) einsetzbar und in dieser mit den mit den ersten Stäben (27) zu einem Lamellenrost verbindbar sind, dass die Pflanzöffnungen (12) jeweils durch benachbarte horizontale und vertikale Stäbe (27, 28) umgrenzt sind.

11. Bausatz nach Anspruch 10, **dadurch gekennzeichnet, dass** die ersten Stäbe (27) jeweils mindestens einen an der Rückwand (4) fixierten Befestigungsflansch aufweisen, dass die ersten Stäbe (27) Einkerbungen haben, die zur Einbauöffnung (2) hin offen sind, und das die zweiten Stäbe (28) durch die Einbauöffnung (2) des Gehäuseteils (1)hindurch in die Einkerbungen der ersten Stäbe (27) einsetzbar sind.

12. Bausatz nach Anspruch 11, **dadurch gekennzeichnet, dass** die Einkerbungen - ausgehend von ihrem der Einbauöffnung (2) zugewandten offenen Ende zu ihrem der Rückwand (4) zugewandten geschlossenen Ende - eine nach unten weisende Komponente haben.

13. Bausatz nach einem der Ansprüche 1 bis 9, **dadurch gekennzeichnet, dass** das Wandbauteil (10) wenigstens ein Plattenteil (10A, 10B, 10C) aufweist, das von mindestens einer Pflanzöffnung (12) quer zu der von dem Plattenteil (10A, 10B, 10C) aufgespannten Ebene durchsetzt wird, dass Plattenteil (10A, 10B, 10C) derart in die Einbauöffnung (2) des Gehäuseteils (1) einsetzbar und mit dem Gehäuseteil (1) verbindbar ist, dass sich das Plattenteil (10A, 10B, 10C) in vertikaler Richtung erstreckt und zwischen der Pflanzöffnung (12) und der Rückwand (4) des Gehäuseteils (1) mindestens ein Hohlraum (11) gebildet ist, dass das Plattenteil (10A, 10B, 10C) an mindestens einer Pflanzöffnung (12) einen kragen- oder hülsenförmigen Vorsprung (29) aufweist, der, wenn das Plattenteil (10A, 10B, 10C) in die Einbauöffnung (2) eingesetzt ist, gegenüber einem dazu benachbarten rückseitigen Oberflächenbereich des Plattenteils (10A, 10B, 10C) zur Rückwand (4) hin in den Hohlraum (11) vorspringt und dort die Pflanzöffnung (12) nach oben hin begrenzt.

14. Bausatz nach Anspruch 13, **dadurch gekennzeichnet, dass** der der Rückwand (4) zugewandte stirnseitige Rand des kragen- oder hülsenförmigen Vorsprungs (29) derart ausgestaltet ist, dass sein oberes Ende weiter zur Rückwand (4) hin vorsteht als sein unteres Ende.

15. Bausatz nach Anspruch 13 oder 14, **dadurch gekennzeichnet, dass** zumindest ein die Pflanzöffnung (12) nach oben hin begrenzender Teilbereich des kragen- oder hülsenförmigen Vorsprungs (29) mindestens eine Wasserdurchlassöffnung (32) aufweist.

16. Bausatz nach einem der Ansprüche 1 bis 15, **dadurch gekennzeichnet, dass** der Bausatz eine Bewässerungseinrichtung mit mindestens einer Wasserleitung (34) aufweist, die zum Bewässern des Pflanzsubstrats in der Innenhöhlung (3) wenigstens eine vorzugsweise oberhalb der mindestens einen Pflanzöffnung (12) angeordnete Wasseraustrittsöffnung (35) hat.

## Claims

1. Kit for producing a greenable wall element, having a housing part (1) which has a front-side installation opening (2) and an inner cavity (3) which is delimited by a rear wall (4), a left-hand side wall (5), a right-hand side wall (6) and a housing base (7) of the housing part (1), wherein the rear wall (4), the side walls (5, 6) and the housing base (7) are of watertight form and the rear wall (4) is connected in a watertight manner to the side walls (5, 6) and to the housing base (7) and the latter is connected in a watertight manner to the side walls (5, 6), having at least one wall component (10, 10') which has at least one planting opening (12) and which is insertable into the installation opening (2) of the housing part (1), and connectable thereto, in such a way that the wall component (10, 10') extends in a vertical direction and, between the surface spanned by the planting opening (12) and the rear wall (4) of the housing part (1), there is formed at least one cavity (11) which is fillable with a planting substrate in such a way that a plant rooted in the planting substrate can grow through the planting opening (12) to the front side, directed away from the cavity (11), of the wall component (10, 10'), wherein at least the rear wall (4) of the housing part (1) is of thermally insulating design, wherein the housing part (1) has an upper housing wall (8) which is connected to the rear wall (4) and to the side walls (5, 6) and which upwardly delimits the inner cavity (3) of the housing part (1), and wherein provision is made on the rear wall (4) of the housing part (1) of fastening points (23) at which there are able to be attached fastening elements passing through the rear wall (4) for anchoring in the outer wall of the building, **characterized in that**, for integrating the greenable wall element into a thermal-insulation composite layer arranged on an outer wall of a building, provision is made at the boundary of the housing part (1), which borders the installation opening (2), of plaster-connection profiles (13A, 13B, 13C, 13D) which have a plaster pull-off edge (14, 14D) and which are connected to at least one plaster-in fabric (15A, 15B, 15C, 15D), **in that** the plaster-in fabric(s) (15A, 15B, 15C, 15D), for plastering into a plaster layer to be applied to an insulation-material layer of the thermal-insulation composite layer that is adjacent to the wall element, protrudes/protrude beyond the outer contour of the housing part (1) on all sides,
**in that** the kit has covers (24) for the fastening points (23) that are connectable in a watertight manner to the wall region of the rear wall (4) that borders the fastening point (23), and **in that** provision is made on the housing part (1) of a drip strip (22) which extends along the lower boundary of the installation opening (2) and whose boundary region which is directed away from the rear wall (4) protrudes in relation to the plane spanned by the plaster pull-off edges (14) of the plaster-connection profiles (13A, 13B, 13C, 13D).

2. Kit according to Claim 1, **characterized in that** the fastening points (23) each have a countersink (25) which is formed in the front-side surface, directed towards the inner cavity (3) of the housing part (1), of the rear wall (4).

3. Kit according to Claim 2, **characterized in that** the countersink (25) in each case has a base and a circumferential wall, which delimit a receiving space for a head part of the fastening element, **in that**, in the base of the countersink (25), there is formed a blind hole through which the rear wall (4) is drillable and/or pierceable orthogonally to the plane spanned by it, or **in that**, in the base of the countersink (25), there is arranged a through-hole, and **in that** the blind hole or the through-hole is spaced apart from the circumferential wall of the countersink (25) and is preferably arranged centrally in relation thereto.

4. Kit according to Claim 2 or 3, **characterized in that** the dimensions of the countersink (25) are selected in such a way that an anchor head of an ETICS anchor (26) is fully countersinkable in the countersink (25), preferably in such a way that the anchor head is arranged flush with the front-side surface, directed towards the inner cavity (3) of the housing part (1), of the wall region of the rear wall (4) that borders the countersink (25).

5. Kit according to one of Claims 1 to 4, **characterized in that** the covers (24) for the fastening points (23) are in the form of plasters having a watertight film which is coated on one side with an adhesive layer, adhering to the film, for connection to the rear wall (4) of the housing part (1), and **in that** the adhesive layer is covered by a peelable protective film.

6. Kit according to one of Claims 1 to 5, **characterized in that** the side walls (5, 6), the housing base (7) and the upper housing wall (8) have at least one layer composed of a thermally insulating material, and **in that** the rear wall preferably has a lower thermal conductivity than said material.

7. Kit according to one of Claims 1 to 6, **characterized in that** the thermally insulating rear wall (4) has
- at least one layer composed of an aerogel and/or
- at least one layer composed of rigid polyurethane foam and/or
- at least one layer composed of rigid polyester foam and/or
- at least one layer composed of rock wool and/or
- at least one layer composed of a renewable insulation material, in particular cork and/or soft wood fibre, or
- is designed as a vacuum panel.

8. Kit according to one of Claims 1 to 7, **characterized in that** the rear wall (4) and/or the side walls (5, 6) and/or the housing base (7) and/or the upper housing wall (8) have/has at least one layer composed of an insulation material that, at its inner surface directed towards the inner cavity (3) of the housing part (1) and/or at its outer surface directed away from the inner cavity (3), is coated with a watertight layer, in particular a PVC sealing film or a PVC panel.

9. Kit according to one of Claims 1 to 8, **characterized in that** the housing part (1) has a front housing wall (9) which is adjacent to the installation opening (2),
- **in that** the front housing wall (9) has a left-hand wall region (9C) which is connected to the left-hand side wall (5) and which projects in relation thereto in the direction of the left-hand boundary of the installation opening (2) and behind which the inner cavity (3) of the housing part (1) extends,
- **in that** the front housing wall (9) has a right-hand wall region (9B) which is connected to the right-hand side wall (6) and which projects in relation to the right-hand side wall (6) in the direction of a right-hand boundary of the installation opening (2) and behind which the inner cavity (3) of the housing part (1) extends, and **in that** the wall component (10, 10'), when it has been inserted into the installation opening (2) of the housing part and connected to the latter, extends in the inner cavity (3) as far as behind the left-hand and right-hand wall regions (9C, 9B) of the front housing wall (8).

10. Kit according to one of Claims 1 to 9, **characterized in that**, in the inner cavity (3) of the housing part (1), there are arranged at least two first bars (27) which extend in the vertical direction and which are fixed to the housing part (1), **in that** the wall component (10) has multiple second bars (28) which are insertable transversely to the first bars (27) into the inner cavity (3) of the housing part (1) and are connectable therein to the first bars (27) so as to form a slatted grating in such a way that the planting openings (12) are each bordered by adjacent horizontal and vertical bars (27, 28).

11. Kit according to Claim 10, **characterized in that** the first bars (27) each have at least one fastening flange which is fixed to the rear wall (4), **in that** the first bars (27) have notches which are open towards the installation opening (2), and **in that** the second bars (28) are insertable into the notches of the first bars (27) through the installation opening (2) of the housing part (1).

12. Kit according to Claim 11, **characterized in that** the notches - from their open end directed towards the installation opening (2) to their closed end directed towards the rear wall (4) - have a downwardly directed component.

13. Kit according to one of Claims 1 to 9, **characterized in that** the wall component (10) has at least one panel part (10A, 10B, 10C) which is extended through by at least one planting opening (12) transversely to the plane spanned by the panel part (10A, 10B, 10C), **in that** the panel part (10A, 10B, 10C) is insertable into the installation opening (2) of the housing part (1), and connectable to the housing part (1), in such a way that the panel part (10A, 10B, 10C) extends in the vertical direction and, between the planting opening (12) and the rear wall (4) of the housing part (1), there is formed at least one cavity (11), **in that** the panel part (10A, 10B, 10C) has at at least one planting opening (12) a collar-shaped or sleeve-shaped projection (29) which, when the panel part (10A, 10B, 10C) has been inserted into the installation opening (2), protrudes into the cavity (11) towards the rear wall (4) in relation to an adjacent rear-side surface region of the panel part (10A, 10B, 10C) and, there, upwardly delimits the planting opening (12).

14. Kit according to Claim 13, **characterized in that** that end-face boundary of the collar-shaped or sleeve-shaped projection (29) which is directed towards the rear wall (4) is designed in such a way that its upper end projects further to the rear wall (4) than its lower end.

15. Kit according to Claim 13 or 14, **characterized in that** at least one sub-region of the collar-shaped or sleeve-shaped projection (29) that upwardly delimits the planting opening (12) has at least one water-passage opening (32).

16. Kit according to one of Claims 1 to 15, **characterized in that** the kit has a watering device with at least one water line (34) which has, for watering the planting substrate in the inner cavity (3), at least one water-outlet opening (35) which is preferably arranged above the at least one planting opening (12).

## Revendications

1. Kit pour la réalisation d'un élément de mur végétalisable, avec une partie de boîtier (1) qui présente une ouverture de montage (2) côté frontal et une cavité intérieure (3) qui est délimitée par une paroi arrière (4), une paroi latérale gauche (5), une paroi latérale droite (6) et un fond de boîtier (7) de la partie de boîtier (1), la paroi arrière (4), les parois latérales (5, 6) et le fond de boîtier (7) étant conçus sous forme étanche à l'eau et la paroi arrière (4) étant reliée de manière étanche à l'eau aux parois latérales (5, 6) et au fond de boîtier (7) et ce dernier aux parois latérales (5, 6), avec au moins un composant de paroi (10, 10') présentant au moins une ouverture de plantation (12), qui peut être inséré dans l'ouverture de montage (2) de la partie de boîtier (1) et relié à celle-ci de telle sorte que le composant de paroi (10, 10') s'étend dans la direction verticale et qu'au moins un espace creux (11) est formé entre la surface définie par l'ouverture de plantation (12) et la paroi arrière (4) de la partie de boîtier (1), lequel peut être rempli d'un substrat de plantation de telle sorte qu'une plante enracinée dans le substrat de plantation peut pousser à travers l'ouverture de plantation (12) sur le côté avant du composant de paroi (10, 10') détourné de l'espace creux (11), au moins la paroi arrière (4) de la partie de boîtier (1) étant conçue sous forme thermiquement isolante, la partie de boîtier (1) présentant une paroi de boîtier supérieure (8) reliée à la paroi arrière (4) et aux parois latérales (5, 6), qui délimite vers le haut la cavité intérieure (3) de la partie de boîtier (1), et il étant prévu sur la paroi arrière (4) de la partie de boîtier (1) des points de fixation (23) sur lesquels peuvent être disposés des éléments de fixation traversant la paroi arrière (4) pour l'ancrage dans la paroi extérieure du bâtiment, **caractérisé en ce que**, pour intégrer l'élément de paroi végétalisable dans une couche composite d'isolation thermique agencée sur une paroi extérieure d'un bâtiment, il est prévu, sur le bord de la partie de boîtier (1) délimitant l'ouverture de montage (2), des profilés de raccordement d'enduit (13A, 13B, 13C, 13D) qui présentent une arête de décollement d'enduit (14, 14D) et qui sont reliés à au moins un tissu d'enduit (15A, 15B, 15C, 15D), **en ce que** le ou les tissus d'enduit (15A, 15B, 15C, 15D) dépassent de tous les côtés du contour extérieur de la partie de boîtier (1) pour être enduits dans une couche d'enduit à appliquer sur une couche de matériau isolant de la couche composite d'isolation thermique adjacente à l'élément de paroi, **en ce que** le kit présente des recouvrements (24) pour les points de fixation (23), qui peuvent être reliés de manière étanche à l'eau à la zone de paroi de la paroi arrière (4) délimitant le point de fixation (23), et **en ce qu'**il est prévu sur la partie de boîtier (1) un larmier (22) s'étendant le long du bord inférieur de l'ouverture de montage (2), dont la zone de bord détournée de la paroi arrière (4) fait saillie par rapport au plan défini par les arêtes de décollement d'enduit (14) des profilés de raccordement d'enduit (13A, 13B, 13C, 13D).

2. Kit selon la revendication 1, **caractérisé en ce que** les points de fixation (23) présentent chacun un creux (25) encastré dans la surface avant de la paroi arrière (4) tournée vers la cavité intérieure (3) de la partie de boîtier (1).

3. Kit selon la revendication 2, **caractérisé en ce que** le creux (25) présente respectivement un fond et une paroi périphérique qui délimitent un espace de réception pour une partie de tête de l'élément de fixation, **en ce qu'**un trou borgne est ménagé dans le fond du creux (25), à travers lequel la paroi arrière (4) peut être percée et/ou traversée orthogonalement au plan qu'elle définit, ou **en ce qu'**un trou de passage est agencé dans le fond du creux (25), et **en ce que** le trou borgne ou le trou de passage est agencé à distance de la paroi périphérique du creux (25) et de préférence au milieu de celle-ci.

4. Kit selon la revendication 2 ou 3, **caractérisé en ce que** les dimensions du creux (25) sont choisies de telle sorte qu'une tête de cheville d'une cheville WDVS (26) peut être entièrement noyée dans le creux (25), de préférence de telle sorte que la tête de cheville est agencée à fleur de la surface avant, tournée vers la cavité intérieure (3) de la partie de boîtier (1), de la zone de paroi de la paroi arrière (4) délimitant le creux (25).

5. Kit selon l'une quelconque des revendications 1 à 4, **caractérisé en ce que** les recouvrements (24) pour les points de fixation (23) sont conçus sous forme de pansement présentant un film étanche à l'eau revêtu sur un côté d'une couche d'adhésif adhérant au film pour la liaison avec la paroi arrière (4) de la partie de boîtier (1), et **en ce que** la couche d'adhésif est recouverte d'un film protecteur pelable.

6. Kit selon l'une quelconque des revendications 1 à 5, **caractérisé en ce que** les parois latérales (5, 6), le fond (7) du boîtier et la paroi de boîtier supérieure (8) présentent au moins une couche d'un matériau thermiquement isolant, et **en ce que** la paroi arrière présente de préférence une conductivité thermique inférieure à celle de ce matériau.

7. Kit selon l'une quelconque des revendications 1 à 6, **caractérisé en ce que** la paroi arrière (4) conçue sous forme thermiquement isolante présente
- au moins une couche d'un aérogel et/ou
- au moins une couche de mousse dure de polyuréthane et/ou
- au moins une couche de mousse dure de polyester et/ou
- présente au moins une couche de laine de roche et/ou
- présente au moins une couche d'un matériau isolant renouvelable, notamment de liège et/ou de fibres de bois tendres ou
- est conçue sous forme de panneau à vide.

8. Kit selon l'une quelconque des revendications 1 à 7, **caractérisé en ce que** la paroi arrière (4) et/ou les parois latérales (5, 6) et/ou le fond de boîtier (7) et/ou la paroi de boîtier supérieure (8) présentent au moins une couche d'un matériau isolant, qui est revêtue d'une couche étanche à l'eau sur sa surface intérieure tournée vers la cavité intérieure (3) de la partie de boîtier (1) et/ou sur sa surface extérieure détournée de la cavité intérieure (3), notamment un film d'étanchéité en PVC ou une plaque en PVC.

9. Kit selon l'une quelconque des revendications 1 à 8, **caractérisé en ce que** la partie de boîtier (1) présente une paroi de boîtier avant (9) qui est adjacente à l'ouverture de montage (2),
- **en ce que** la paroi de boîtier avant (9) a une zone de paroi gauche (9C) reliée à la paroi latérale gauche (5) et faisant saillie par rapport à celle-ci en direction du bord gauche de l'ouverture de montage (2), derrière laquelle s'étend la cavité intérieure (3) de la partie de boîtier (1),
- **en ce que** la paroi de boîtier avant (9) a une zone de paroi droite (9B) reliée à la paroi latérale droite (6) et faisant saillie par rapport à la paroi latérale droite (6) en direction d'un bord droit de l'ouverture de montage (2), derrière laquelle s'étend la cavité intérieure (3) de la partie de boîtier (1),
et **en ce que** le composant de paroi (10, 10'), lorsqu'il est inséré dans l'ouverture de montage (2) de la partie de boîtier et relié à celle-ci, s'étend dans la cavité intérieure (3) jusque derrière les zones de paroi gauche et droite (9C, 9B) de la paroi de boîtier avant (8).

10. Kit selon l'une quelconque des revendications 1 à 9, **caractérisé en ce que** dans la cavité intérieure (3) de la partie de boîtier (1) sont agencées au moins deux premières barres (27) qui s'étendent dans la direction verticale et sont fixées à la partie de boîtier (1), **en ce que** le composant de paroi (10) présente plusieurs deuxièmes barres (28), qui peuvent être insérées transversalement aux premières barres (27) dans la cavité intérieure (3) de la partie de boîtier (1) et qui peuvent être reliées dans celle-ci aux premières barres (27) pour former une grille à lamelles, de telle sorte que les ouvertures de plantation (12) sont respectivement délimitées par des barres horizontales et verticales voisines (27, 28).

11. Kit selon la revendication 10, **caractérisé en ce que** les premières barres (27) présentent chacune au moins une bride de fixation fixée à la paroi arrière (4), **en ce que** les premières barres (27) ont des encoches qui sont ouvertes vers l'ouverture de montage (2), et **en ce que** les deuxièmes barres (28) peuvent être insérées à travers l'ouverture de montage (2) de la partie de boîtier (1) dans les encoches des premières barres (27).

12. Kit selon la revendication 11, **caractérisé en ce que** les encoches - en partant de leur extrémité ouverte tournée vers l'ouverture de montage (2) vers leur extrémité fermée tournée vers la paroi arrière (4) - ont une composante dirigée vers le bas.

13. Kit selon l'une quelconque des revendications 1 à 9, **caractérisé en ce que** le composant de paroi (10) présente au moins une partie de plaque (10A, 10B, 10C) qui est traversée par au moins une ouverture de plantation (12) transversalement au plan défini par la partie de plaque (10A, 10B, 10C), **en ce que** la partie de plaque (10A, 10B, 10C) peut être insérée dans l'ouverture de montage (2) de la partie de boîtier (1) et peut être reliée à la partie de boîtier (1) de telle sorte que la partie de plaque (10A, 10B, 10C) s'étend dans la direction verticale et qu'au moins un espace creux (11) est formé entre l'ouverture de plantation (12) et la paroi arrière (4) de la partie de boîtier (1), **en ce que** la partie de plaque (10A, 10B, 10C) présente sur au moins une ouverture de plantation (12) une saillie (29) en forme de collerette ou de douille, qui, lorsque la partie de plaque (10A, 10B, 10C) est insérée dans l'ouverture de montage (2), fait saillie dans l'espace creux (11) par rapport à une zone de surface arrière de la partie de plaque (10A, 10B, 10C) voisine de celle-ci, vers la paroi arrière (4) et y délimite l'ouverture de plantation (12) vers le haut.

14. Kit selon la revendication 13, **caractérisé en ce que** le bord frontal, tourné vers la paroi arrière (4), de la saillie (29) en forme de collerette ou de douille est conçu de telle sorte que son extrémité supérieure dépasse davantage vers la paroi arrière (4) que son extrémité inférieure.

15. Kit selon la revendication 13 ou 14, **caractérisé en ce qu'**au moins une zone partielle de la saillie (29) en forme de collerette ou de douille délimitant l'ouverture de plantation (12) vers le haut présente au moins une ouverture de passage d'eau (32).

16. Kit selon l'une quelconque des revendications 1 à 15, **caractérisé en ce que** le kit présente un dispositif d'irrigation avec au moins une conduite d'eau (34) qui, pour l'irrigation du substrat de plantation dans la cavité intérieure (3), a au moins une ouverture de sortie d'eau (35) agencée de préférence au-dessus de l'au moins une ouverture de plantation (12).
